# EUROPÄISCHE PATENTSCHRIFT

(11) **EP 0 821 196 B1**
(45) Veröffentlichungstag und Bekanntmachung des Hinweises auf die Patenterteilung: **02.01.2003**
(21) Anmeldenummer: 97112845.9
(22) Anmeldetag: 25.07.1997
(51) Int. Cl.: F23C 11/00, F23G 7/06

(54) **Verfahren und Vorrichtung zur NOx- armen Verbrennung stickstoffhaltiger, organischer und anorganischer Spezies**
Method and device for the combustion with low NOx of Nitrogen containing organic and inorganic species
Procédé et dispositif pour la combustion à faible niveau de NOx des espèces organiques ou inorganiques contenant de l'azote

(30) Priorität: 26.07.1996 DE 19630417; 24.07.1997 DE 19731958
(43) Veröffentlichungstag der Anmeldung: 28.01.1998
(73) Patentinhaber: Forschungszentrum Karlsruhe GmbH, 76133 Karlsruhe (DE)
(72) Erfinder: Domschke, Thomas, Dr., (DE); Durein, Pirmin, 67354 Römerberg (DE); Sold, Gerald, 67346 Speyer (DE); Siegle, Hansjörg, Dr., 67071 Ludwigshafen (DE); Wünning, Joachim G., 71229 Leonberg (DE); Seifert, Helmut, Dr., 67069 Ludwigshafen (DE)
(74) Vertreter: Isenbruck, Günter, Dr.

(56) Entgegenhaltungen:
- DE-A- 3 224 054
- DE-A- 3 507 558
- US-A- 4 725 222
- US-A- 5 425 630

## Beschreibung

Die Erfindung betrifft ein Verfahren sowie eine Vorrichtung zur Verbrennung eines im wesentlichen gasförmigen Massenstroms, der als Stickstoffkomponente NOₓ, HCN oder NH₃ oder ein Gemisch aus zwei oder mehr davon enthält.

Der übliche Weg zur Umwandlung fossiler Brennstoffe in Energie und Wärme besteht in der Flammenoxidation des Brennstoffs, wobei in der Regel Flammentemperaturen von 600°C bis 2000°C erreicht werden. Die industrielle Nutzung solcher Verbrennungsvorgänge hat dabei üblicherweise entweder die direkte Gewinnung von Wärme oder deren Sekundärprodukten in Form von mechanischer oder elektrischer Energie, oder aber die Ausnutzung des Verbrennungsvorgangs zur thermischen Stoffumwandlung schädlicher Substanzen in unschädliche Folgeprodukte zum Ziel. In der Regel wird als Oxidationsmittel bzw. als Verbrennungsluft die Außenluft zugeführt, wobei jedoch der darin enthaltene hohe Stickstoffanteil in Abhängigkeit von der Verbrennungstemperatur zu hohen NOₓ-Emissionen führt.

Bei der Verbrennung mit Sauerstoffüberschuß wird zusätzlich der im Brennstoff enthaltene Stickstoff vollständig oder wenigstens teilweise in Stickstoffoxide (NOₓ) umgewandelt, und dies führt in der Regel zu NOₓ-Emissionswerten, welche die zulässigen Grenzwerte in den meisten Industrieländern überschreiten. Entstehen bei der Verbrennung zusätzlich noch CH-Radikale, so stellt dies eine weitere Quelle für die Bildung von Stickoxiden dar. Den hier geschilderten Bildungsmechanismen, mit Ausnahme der NOₓ-Bildung aus im Brennstoff enthaltenem Stickstoff (Brennstoff-N), läßt sich durch eine Absenkung der Flammenspitzentemperaturen erheblich entgegenwirken. Hierfür wurden zahlreiche Vorrichtungen und Verfahren, beispielsweise interne und externe Rauchgasrezirkulation oder Wasser- und Wasserdampfzugabe, entwickelt. Bei der internen und externen Rauchgasrezirkulation handelt es sich um ein Verfahren, bei dem das Rauchgas entweder in einer genügend großen Brennkammer oder durch Auskreisung aus der Brennkammer abgekühlt und an geeigneter Stelle zur Senkung der Flammenspitzentemperatur wieder eingekreist wird. Besondere Bedeutung kommt dabei der sogenannten inneren Rezirkulation zu, die eine intensive Vermischung der Flammengase mit relativ kalten Ofengasen beinhaltet.

Ebenfalls bedeutend zur Reduzierung des NOₓ-Anteils im Abgas und außerdem auch bei stickstoffhaltigen Brennstoffen wirksam ist eine zweistufige Verbrennung mit einer sogenannten gestuften Luftzugabe.

Hierbei wird dem Brennstoff in der ersten Verbrennungsstufe nur soviel Verbrennungsluft zugeführt, daß es nicht zu einem Sauerstoffüberschuß kommt und damit die im Brennstoff enthaltene, stickstoffhaltige Komponente (Brennstoff-N) durch die weitgehend reduzierenden Bedingungen zu molekularem Stickstoff abgebaut wird. In der zweiten Verbrennungsstufe findet dann eine Verbrennung mit Sauerstoffüberschuß statt, in der jedoch nur noch die thermische NOₓ-Bildung, die im Vergleich zur Bildung von NOₓ aus im Brennstoff enthaltenen stickstoffhaltigen Anteilen eine geringere Rolle spielt, abläuft.

Ein ähnliches Problem liegt auch der aus dem Stand der Technik bekannten dreistufigen Verbrennung zugrunde, wobei zunächst durch Verbrennung mit Sauerstoffüberschuß Brennstoff-N gezielt unter NOₓ-Bildung umgesetzt wird, während in einer zweiten Verbrennungsstufe durch einen Überschuß an Brennstoff (außer Brennstoff-N) und Mangel an Sauerstoff durch reduzierende Bedingungen das gebildete NOₓ wieder weitgehend zu molekularem Stickstoff reduziert wird. In der sich daran anschließenden dritten Verbrennungsstufe findet wieder lediglich thermische NOₓ-Bildung statt, die eine untergeordnete Rolle bei. der Gesamt-NOₓ-Bildung spielt.

Besonders große Probleme treten dann auf, wenn durch den Verbrennungsvorgang Brennstoff-N-haltige, gasförmige Stoffe unschädlich gemacht und damit vernichtet werden sollen. In der chemischen und petrochemischen Industrie müssen des öfteren Abgasströme entsorgt werden, die hohe Anteile an Stoffspezies mit chemisch gebundenem Stickstoff enthalten. Unterwirft man solche Gasströme einer einstufigen Verbrennung, so sorgt der im Gas gebundene Stickstoff für ein drastisches Ansteigen der NOₓ-Werte, in der Regel weit über die zulässigen gesetzlichen Grenzwerte in den meisten Industrieländern hinaus. Zur Reduzierung der NOₓ-Emissionen lassen sich beispielsweise die stufenweise Verbrennung oder aber eine dem Verbrennungsvorgang nachgeschaltete katalytische oder nicht-katalytische Entstickung der Rauchgase einsetzen. Beide Verfahren geben entweder keine ausreichende Sicherheit für dauerhaft niedrige Emissionen oder verursachen hohe Investitions- und Betriebskosten, die diese Form der Entsorgung stickstoffhaltiger Gasströme häufig unwirtschaftlich erscheinen lassen.

Unter "Brennstoff-N" wird im Rahmen des vorliegenden Textes der Stickstoffanteil in einem zu verbrennenden Gasgemisch verstanden, der nicht in Form molekularen Stickstoffs (N₂) vorliegt, sondern in chemisch gebundener Form. Beispiele für Stoffe in denen Stickstoff als "Brennstoff-N" vorliegt sind NOₓ (z.B. NO, NO₂), N₂O, HCN und NH₃.

Die EP-B 0 463 218 betrifft ein Verfahren zum Verbrennen von Brennstoff in einem Verbrennungsraum und eine Vorrichtung zur Durchführung dieses Verfahrens. Zur Erzielung möglichst niedriger NOₓ-Werte werden hierbei die Verbrennungsabgase, denen vorher aus dem System nach außen abgeführte Nutzwärme entzogen wurde, mit der vorgewärmten Verbrennungsluft in einem bestimmten Verbrennungsabgas-Rückführverhältnis durch interne Rezirkulation mit der Verbrennungsluft vermischt. Das Verbrennungsabgas- bzw. -luftgemisch wird dann im Verbrennungsraum mit dem Brennstoff unter Ausbildung einer Oxidationszone zusammengebracht, in der eine im wesentlichen flammenlose und pulsationsfreie Oxidation stattfindet.

Dokument US-A-5 425 630 beschreibt ein Verfahren zur minderung von Emissionen, wobei ein Kinetischer Dissoziator für die vollständige Verbrennung des Brennstoffs verwendet wird.

Die DE-A 41 16 959 betrifft ein Verfahren und eine Vorrichtung zur Minderung der NOₓ-Emission. Die Druckschrift beschreibt als Weg zu einer möglichst NOₓ-emissionsarmen Verbrennung stickstoffhaltiger Brennstoffe eine stufenweise Reaktion, wobei in einer ersten Stufe eine Reduktion aller vorhandenen oder sich spontan bildenden Stickstoffoxide erfolgt und in einer nachfolgenden Stufe bzw. nachfolgenden mehreren Stufen eine Nachreaktion bis zur vollständigen Oxidation aller Reduktionskomponenten erfolgt. Neben dem Nachteil einer stufenweisen Durchführung des Verbrennungsvorgangs muß als weitere technische Maßnahme ein sogenannter Aktivierungsgenerator eingebaut werden, der aus einer Durchtrittsöffnungen aufweisenden Wand besteht. Ebenso ist es für die beschriebene Problemlösung von großer Bedeutung, daß in allen Reaktionsstufen, in denen ein unterstöchiometrisches Verhältnis zwischen durch die Verbrennungsluft zugeführtem Sauerstoff und Brennstoff besteht, zusätzlich Wasserdampf als Reaktionspartner zugeführt wird. Neben dem erhöhten technischen Aufwand einer mehrstufigen Reaktionsführung weist diese Lösung die Nachteile eines weiteren technischen Behandlungsschritts auf.

Problematisch, und mit den o.g. Verfahren nicht befriedigend oder nur unter hohem technischen Aufwand lösbar, war bislang die Entsorgung stickstoffhaltiger Spezies (außer Ammoniak, s.o.), die gasförmig, flüssig oder fest als zu entsorgende Nebenprodukte bei vielen chemischen Prozessen anfallen. Hierzu gehören beispielsweise NO, NO₂, N₂O und HCN als gasförmige Vertreter sowie Nitrobenzol, Acrylnitril und Acetonitril als Beispiele für flüssige Vertreter solcher schwer zu entsorgender stickstoffhaltiger Spezies.

Von den hier geschilderten Nachteilen des Standes der Technik ausgehend liegt der Erfindung die Aufgabe zugrunde, ein Verfahren zu entwickeln, das es ermöglicht, stickstoffhaltige Spezies die gasförmig, flüssig oder gegebenenfalls fest als zu entsorgende Nebenprodukte bei vielen chemischen Prozessen anfallen, beispielsweise NO, NO₂, N₂O und/oder HCN als gasförmige Vertreter, sowie Nitrobenzol, Acrylnitril und Acetonitril als Beispiele für flüssige Vertreter, mit geringem technischem Aufwand zu entsorgen.

Bekanntermaßen entstehen bei der Pyrolyse pyrolisierbarer stickstoffhaltiger organischer Verbindungen hauptsächlich NOₓ, HCN und NH₃. Die Verbrennung von Gasströmen mit einem Gehalt an diesen Substanzen führt zu den Eingangs genannten hohen NOₓ-Gehalten der Verbrennungsabgase. Die NOₓ-, HCN- und NH₃-Anteile im Verbrennungsabgas müssen daher mit hohem technischem Aufwand entweder schon während des Verbrennungsvorgangs unterdrückt, oder im Anschluß daran aus dem Abgas entfernt werden. Gelänge es, den Gehalt des bei der Pyrolyse entstehenden Gasgemischs an Brennstoff-N weitgehend zu entfernen, so ließen sich auch Abgasströme mit einem Gehalt an NOₓ, HCN und NH₃ ohne großen technischen Aufwand entsorgen.

Eine weitere Aufgabe der Erfindung ist es demnach, Gasströme mit einem Gehalt an HCN oder NH₃ oder einem Gemisch aus zwei oder mehr der Gaskomponenten NOₓ, HCN und NH₃, ohne aufwendige Sekundärmaßnahmen so zu verbrennen, daß die NOₓ-Konzentration im Rauchgas weit unter den in den meisten Industrieländern geltenden gesetzlichen Grenzwerten, vozugsweise unterhalb etwa 200 mg/m³ i.N. (tocken, im Normalzustand, als NO₂ gerechnet) bleibt.

Eine weitere Aufgabe besteht darin, eine Vorrichtung zur Verfügung zu stellen, mit der das erfindungsgemäße Verfahren verwirklicht werden kann.

Es wurde nun gefunden, daß sich bei der Verbrennung Brennstoff-N-haltiger Gasströme die Bildung schädlicher Stickoxide aus Brennstoff-N aufweisenden Gaskomponenten, beispielsweise HCN oder NH₃ oder einem Gemisch aus zwei oder mehr der Gaskomponenten NOₓ, HCN und NH₃, weitgehend unterdrücken läßt, wenn man die Brennstoff-N-haltige Gaskomponente vor der Verbrennung in ein Spaltgas, enthaltend N₂, H₂ und CO (sowie gegebenenfalls CO₂ und/oder H₂O), spaltet. Vorteilhafterweise läßt sich die Verbrennung des so entstandenen Spaltgases mit erdgasbetriebenen Impulsbrennern durchführen, wobei die Einspeisung des Spaltgases im Rückstromgebiet der Rauchgase des Impulsbrenners liegt. Diese Form der Einspeisung bewirkt, daß das Spaltgas mit einem ansteigenden O₂-Konzentrationsprofil beaufschlagt wird, was zu einer Senkung der Flammenspitzentemperatur beiträgt.

Gegenstand der Erfindung ist somit ein Verfahren zur NOₓ-emissionsarmen Verbrennung eines Gasstroms, der als Brennstoff-N-haltige Gaskomponente mindestens HCN oder NH₃ oder ein Gemisch aus zwei oder mehr der Gaskomponenten NOₓ, HCN und NH₃ enthält, bei dem die Brennstoff-N-haltige Gaskomponente vor der Verbrennung wenigstens weitgehend in ein Spaltgas, enthaltend N₂, H₂ und gegebenenfalls CO, CO₂ und H₂O gespalten wird.

Im folgenden Text werden die gasförmigen Komponenten, die durch Pyrolyse stickstoffhaltiger, organischer Verbindungen erhältlich sind, als "Pyrolysegas" bezeichnet. Das Pyrolysegas stellt in der Regel die "Brennstoff-N-haltige Gaskomponente" dar, die Erfindung ist jedoch nicht auf Pyrolysegas beschränkt, sondern es kann jede gasförmige Zusammensetzung mit dem erfindungsgemäßen Verfahren behandelt werden, die dem Pyrolysegas entspricht. Demgemäß werden beispielsweise auch NH₃-haltige Gasströme oder reiner NH₃, wie sie beispielsweise bei der Produktion von Isocyanaten oder Pigmenten anfallen, oder auch reiner NH₃, unter dem Begriff "Pyrolysegas" zusammengefasst. Der besseren Übersicht halber, um Ausführungsformen, die nur die Zersetzung von NH₃-haltigen Gasströmen zum Gegenstand haben, werden diese Gasströme "NH₃haltiges Abgas" genannt.

Die im Anschluß an die weiter unten beschriebene Spaltung des Pyrolysegases oder des NH₃-haltigen Abgases erhältliche gasförmige Komponente wird im weiteren Verlauf des Textes als "Spaltgas" bezeichnet.

Die aus der Verbrennung des Spaltgases in der Brennkammer entstehenden Gase werden im weiteren Verlauf des Textes als "Verbrennungsabgas" bezeichnet.

NH₃-haltige Abgase und Gasgemische fallen bei vielen chemischen Produktionsprozessen an und können mit Hilfe des erfindungsgemäßen Verfahrens entsorgt und vernichtet werden. Zu den Hauptquellen der für NH₃-haltige Abgase und Gasgemische zählen beispielsweise die Herstellung von Pigmenten sowie die Herstellung von Isocyanaten. Dabei entstehende NH₃-haltige Abgase weisen unterschiedliche NH₃-Konzentrationen auf, wobei die mit dem erfmdungsgemäßen Verfahren verarbeitbaren Ammoniakkonzentrationen im NH₃-haltigen Abgas bei bis zu 100% liegen können.

Stickstoffhaltige flüssige oder gasförmige Spezies, beispielsweise NO, NO₂, N₂O, HCN und NH₃ als gasförmige Vertreter sowie beispielhaft Nitrobenzol, Acrylnitril und Acetonitril als flüssige Vertreter, fallen bei vielen chemischen Produktionsprozessen an. So beispielsweise in der Petrochemie, bei der Herstellung und Verarbeitung von Aminen wie Hydroxylamin, bei der Pigmentreduktion, bei der Isocyanatherstellung oder bei der Herstellung von Aminen zur Polyamidproduktion.

Ein Rückführung dieser Nebenprodukte in den Produktionsprozess ist häufig nicht möglich oder unwirtschaftlich, erfordert aber in der Folge eine Entsorgung der Nebenprodukte. Während sich die thermische Verwertung als Entsorgungsweg bei stofflich schwer zu verwertenden Stoffen häufig bewährt hat, scheidet sie bei stickstoffhaltigen Stoffen aus Gründen der NOₓ-Bildung und dem zur Reduzierung derselben erforderlichen Aufwand in der Regel aus. Die im Rahmen des erfindungsgemäßen Verfahrens praktizierte Abfolge von Verfahrensschritten läßt jedoch eine einfache und ökonomische thermische Verwertung solcher Nebenprodukte zu.

Einer Ausführungsform des erfindungsgemäßen Verfahrens liegt dabei die Erkenntnis zugrunde, daß die o.g. Nebenprodukte sich pyrolytisch weitgehend zu NOₓ, HCN und NH₃ (insofern sie nicht schon in der genannten Form vorliegen) spalten lassen. Das bei einer solchen Pyrolyse entstehende Gas wird im folgenden Text als "Pyrolysegas" bezeichnet, soweit nicht ausdrücklich etwas anderes angegeben ist.

Während die katalytische Zerlegung von Ammoniak in N₂ und H₂ in Umkehr der Bildungsgleichung bekannt war, wurde nun festgestellt, daß bestimmte, zur Ammoniakspaltung geeignete Katalysatoren auch die Spaltung weiterer Brennstoff-N-haltiger Gaskomponenten erlauben. Die Spaltprodukte sind frei von Brennstoff-N und tragen daher bei der Verbrennung nicht zur NOₓ-Bildung aus Brennstoff-N bei.

In Umkehr der dem Fachmann allgemein bekannten Bildungsgleichung für Ammoniak aus den Komponenten Stickstoff und Wasserstoff, die üblicherweise bei extrem hohen Drücken und hohen Temperaturen abläuft, läßt sich Ammoniak bei Normaldruck und erhöhten Temperaturen wenigstens teilweise wieder in seine Ausgangskomponenten Stickstoff und Wasserstoff zerlegen. Besonders vorteilhaft und nahezu quantitativ verläuft diese Rückreaktion allerdings in Gegenwart von Katalysatoren, insbesondere in Gegenwart von Metallen oder Metalloxiden. Vorteilhafterweise erfolgt daher die Zerlegung des Pyrolysegases im erfindungsgemäßen Verfahren katalytisch durch Metalle oder Metalloxide. Im folgenden wird der Begriff *"Katalysator"* synonym sowohl fiir katalytisch wirksame Metalle als auch für Metalloxide gebraucht.

Spaltet man das oben beschriebene Pyrolysegas (in der Regel Ammoniak in Gegenwart von HCN und/oder NOₓ) unter Verwendung von Katalysatoren katalytisch, vorzugsweise in einem Spaltreaktor der im Rahmen des vorliegende Textes beschriebenen Art, so erhält man unter Beachtung der notwendigen stöchiometrischen Verhältnisse ein Spaltgas, das im wesentlichen nur noch N₂, H₂ und gegebenenfalls CO (bei der Anwesenheit von HCN im Pyrolysegas) und/oder CO₂ und/oder H₂O enthält. Ein solches Gasgemisch ist damit weitgehend frei von Brennstoff-N und kann anschließend mit bekannten Verfahren zur Vermeidung von thermischer und prompter NOₓ-Bildung verbrannt werden.

Zur katalytischen Spaltung der Brennstoff-N-haltigen Gaskomponente wird im Rahmen der vorliegenden Erfindung ein Metall und/oder Metalloxid enthaltender Katalysator eingesetzt.

Beim Einsatz von Metallen als Katalysatoren zur Pyrolysegasspaltung ist es vorteilhaft, wenn mindestens das zur katalytischen Spaltung eingesetzte Metall Nebengruppenelemente wie Chrom, Titan, Niob, Molybdän, Nickel, Vanadium oder Eisen, beispielsweise in Form einer Mischung oder Legierung, enthält. Gegebenenfalls können die einzelnen Metalle auch in reiner Form eingesetzt werden. Als besonders vorteilhaft und damit als bevorzugt hat sich die Verwendung von Edelstahl als Katalysator erwiesen, wobei dem Edelstahl die aufgezählten Elemente in wechselnden Zusammensetzungen und unterschiedlichen Mengen beigemischt sind. Hierfür kommen insbesondere solche Edelstähle in Frage, wie sie beispielsweise in der DIN 17440 oder in der DIN 17441 beschrieben sind. Besonders geeignet ist der nach DIN 17440 mit dem Kurznamen X6CrNiTi 18 10 bezeichnete Edelstahl. Es ist hierbei in der Regel ausreichend, wenn der Spaltreaktor selbst oder zumindest dessen mit dem Ammoniak oder dem ammoniakhaltigen Gasgemisch in Kontakt tretende Innenfläche aus dem katalytisch wirksamen Katalysatormetall bestehen oder dies zumindest anteilig enthalten. Eine Oberflächenvergrößerung, beispielsweise durch Vermahlen oder Aufrauhen kann bei Bedarf vorgenommen werden, wodurch die katalytisch wirksame Oberfläche vergrößert wird. Der Katalysator selbst ist dadurch gegebenenfalls kompaketer gestaltbar.

Ebenfalls bevorzugt und im Hinblick auf den Wirkungsgrad bei der katalytischen Spaltung von Brennstoff-N-haltigen Gaskomponenten als gleichwertig anzusehen ist der Einsatz von Metalloxiden. Grundsätzlich geeignet sind hierzu die Oxide der oben genannten Metalle, wobei allerdings die Verwendung von Nickeloxid als Katalysator besonders bevorzugt ist. Im Falle des Einsatzes von Metalloxid als Katalysator, liegt der Katalysator in der Regel in Pulverform in einer Katalysatorschüttung im Spaltreaktor vor. Ebenso sind aber auch andere Katalysatorgeometrien einsetzbar, beispielsweise in Form von Wabenkörpern oder ähnlichem.

Die Spaltung des Pyrolysegases findet zweckmäßigerweise in einem rohrförmigen, mit Katalysatormaterial beschickten oder Katalysatormetall enthaltenden oder aus Katalysatormetall bestehenden Reaktor mit kreisförmigen, ovalen, rechteckigen oder quadratischen Querschnitten statt, wobei gegebenenfalls andere Formen wie beispielsweise die Ausbildung als Stern oder n-Eck sinnvoll sein können. Der rohrförmige Reaktor wird im folgenden auch *"Spaltreaktor"* genannt.

Zur Beheizung des Spaltreaktors kann gegebenenfalls eine externe Energiequelle eingesetzt werden, besonders vorteilhaft ist es jedoch, wenn die gewünschte Katalysatortemperatur wenigstens weitgehend durch die aus der Feuerungsleistung des Brenners erhältliche Energie aufrechterhalten wird. Es isi ebenfalls möglich, die zur Verbrennung eingesetzte Luft auf eine erhöhte Temperatur vorzuwärmen. Das erfindungsgemäße Verfahren gewährleistet auch dann noch einwandfreie Einhaltung der gewünschten Grenzwerte, wenn die zur Verbrennung benötigte Luft auf bis zu 1000°C vorgewärmt wird. Besonders gute Ergebnisse werden jedoch erhalten, wenn die Lufttemperatur etwa 100°C bis etwa 600°C und insbesondere etwa 200°C bis etwa 400°C beträgt.

Vorteilhafterweise enthält das entstehende, zur Verbrennung vorgesehene Spaltgas nur die Komponenten N₂, H₂ und gegebenenfalls CO, CO₂ und H₂O, da so eine optimale, NOₓ-emissionsarme Verbrennung gewährleistet ist.

Gegebenenfalls kann Verrußung (bei O-Unterschuß) oder starke NOₓ-Bildung (bei O-Überschuß) auftreten und den Spaltprozeß empfindlich stören. Es ist demnach sinnvoll, und im Rahmen des erfindungsgemäßen Verfahrens als bevorzugte Verfahrensvariante vorgesehen, wenn bei einer Abweichung der Zusammensetzung des Pyrolysegases von der im Spaltreaktor erforderlichen, stöchiometrischen Zusammensetzung von C, N und O gegebenenfalls gasförmige Komponenten, beispielsweise NH₃, O₂, Luft, H₂, H₂O oder CO₂ dem Pyrolysegasstrom zugeführt werden können, um für eine geeignete Stöchiometrie beim anschließenden Spaltprozeß zu sorgen. Die Zuführung erfolgt dabei vorteilhafterweise durch eine oder mehrere Gaszuführungsdüsen, die gleichzeitig und/oder getrennt ansteuerbar entlang der Gaspassage im Spaltreaktor angeordnet sind. Im Falle des Einsatzes von Metalloxidkatalysatoren sind die Gaszuführungsdüsen vorteilhalterweise in der Katalysatorschüttung angebracht. Die Anwesenheit von gegebenenfalls bei der Spaltung entstehendem Wasser im Spaltgasstrom wirkt sich auf den Erfolg des erfindungsgemäßen Verfahrens nicht störend aus.

Eine besonders hohe Wirksamkeit entfalten die eingesetzten Katalysatoren dann, wenn sie auf eine erhöhte Temperatur gebracht werden. Befriedigende Ergebnisse lassen sich in einem Temperaturbereich von etwa 200°C bis etwa 1200°C erreichen, wobei es besonders vorteilhaft ist, wenn der Katalysator eine Arbeitstemperatur von etwa 500°C bis etwa 1000°C, bevorzugt etwa 650°C bis 1000°C, erreicht.

Zur Beheizung des Spaltreaktors kann eine externe Energiequelle eingesetzt werden, besonders vorteilhaft ist es jedoch, wenn die gewünschte Katalysatortemperatur wenigstens weitgehend, vorzugsweise vollständig, durch die aus der Feuerungsleistung des Brenners erhältliche Energie eingestellt und/oder aufrechterhalten wird.

Gegebenenfalls kann bei bestimmten Gemischen von Inhaltsstoffen im Pyrolysegas eine stark exotherme Reaktion auftreten (beispielsweise bei der Anwesenheit großer Mengen NOₓ bei gleichzeitiger .Anwesenheit von H₂), welche die Katalysatortemperatur über den für ideale Reaktionsbedingungen erforderlichen Temperaturbereich erhöht. In diesem Fall kann zur Kühlung des Reaktionsgemischs Wasser zudosiert werden, oder es kann eine externe Kühlung des Spaltreaktors durch Wasserzugabe in den Brennraum oder durch Wärmetauscher entlang des Spaltreaktors erfolgen.

Beim erfindungsgemäßen Verfahren ist es sinnvoll, jedoch nicht zwingend vorausgesetzt, daß es sich bei der in den Spaltreaktor eingespeisten, Brennstoff-N-haltigen Gaskomponente ausschließlich um Pyrolysegas handelt. Es ist ebensogut möglich, daß das Pyrolysegas mit einem aus einer anderen Quelle stammenden Gasstrom, der beispielsweise als Trägergas genutzt werden soll, vermischt ist.

In einer bevorzugten Ausführungsform stammt die Brennstoff-N-haltige Gaskomponente wenigstens anteilig aus dem pyrolytischen Abbau stickstoffhaltiger organischer Spezies.

In einer weiteren bevorzugten Ausführungsform entsteht die Brennstoff-N-haltige Gaskomponente bei einer chemischen Reaktion, insbesondere bei der Herstellung von Pigmenten sowie der Herstellung von Isocyanaten, und wird direkt in den Spaltreaktor eingespeist.

Der Anteil an Pyrolysegas in der Brennstoff-N-haltigen Gaskomponente kann daher im Rahmen des erfindungsgemäßen Verfahrens in weiten Grenzen variieren. So sind Pyrolysegasanteile von weniger als etwa 1 Gew.-% an der gesamten Brennstoff-N-haltigen Gaskomponente möglich, die Obergrenze liegt bei 100 Gew.-% Pyrolysegas. Unterhalb eines Anteils von etwa 1 Gew.-%, beispielsweise bei etwa 0,5 Gew.-% oder darunter ist eine Durchführung des Verfahrens zwar möglich, jedoch wirtschaftlich nicht mehr sinnvoll. Zwischen den Grenzen von etwa 1 Gew.-% und etwa 100 Gew.-% ist jedoch jede beliebige Menge an Pyrolysegas mit dem erfindungsgemäßen Verfahren verarbeitbar. So können Anteile von beispielsweise 10 Gew.-%, 20 Gew.-%, 40 Gew.-%, 60 Gew.-% oder 80 Gew.-% Pyrolysegas mit dem erfindungsgemäßen Verfahren gespalten und anschließend NOₓ-emissionsarm in einer Verbrennungsvorrichtung verbrannt werden.

Um durch Anwendung des erfindungsgemäßen, einstufigen Verbrennungsverfahrens möglichst niedrige NOₓ-Emissionen zu gewährleisten, sollte die Spaltung der Brennstoff-N-haltigen Gaskomponente im Spaltreaktor vor dem Eintritt in die Brennkammer möglichst vollständig abgelaufen sein, d.h., das Spaltgas sollte lediglich die Komponenten N₂, H₂ und gegebenenfalls CO (sowie gegebenenfalls CO₂ und/oder H₂O) enthalten. Wie weit die Pyrolysegasspaltung im Spaltreaktor durchgeführt werden sollte, hängt von der Beladung der eingespeisten Brennstoff-N-haltigen Gaskomponente mit Pyrolysegas ab. Enthält das Abgas nur geringe Pyrolysegasmengen, so kann unter Umständen eine Ausbeute bei der Spaltung von beispielsweise 30, 40 oder 50% ausreichend sein.

In der Regel wird es jedoch so sein, daß die Brennstoff-N-haltige Gaskomponente mit größeren Pyrolysegasmengen belastet ist. Da davon auszugehen ist, daß die in die Brennkammer eintretenden Brennstoff-N-haltigen Gaskomponenten zu wenigstens 80% in Stickoxide umgewandelt werden, sollten im Spaltgas in der Regel nur noch höchstens etwa 200 ppm, vorteilhafterweise höchsten etwa 150 ppm und insbesondere höchstens etwa 100 ppm Brennstoff-N-haltige Gaskomponenten enthalten sein. Dies bedeutet, daß die Spaltausbeute des Katalysators, beispielsweise bezogen auf eine Pyrolysegaskonzentration von 100% vor dem Eintritt in den Spaltreaktor, wenigstens zu 99,98% ablaufen sollte. Vorteilhafterweise beträgt die Spaltausbeute mindestens 99,99% oder noch mehr. Höhere Spaltausbeuten haben selbstverständlich eine noch weitere Reduktion der NOₓ-Emissionen zur Folge.

Bei niedrigeren Konzentrationen von Brennstoff-N-haltigen Gaskomponenten kann selbstverständlich auch mit einer geringeren Spaltleistung der Spaltreaktoren ein niedrige NOₓ-Emissionswert erreicht werden. So ist beispielsweise bei einer Konzentration von 10% Pyrolysegas vor Eintritt in den Spaltreaktor eine Spaltleistung von 99,9% ausreichend, um beispielsweise die Konzentration von 100 ppm im in die Brennkammer einzuspeisenden Gas einzuhalten. Eine weitere Reduktion des Pyrolysegasgehalts vor Eintritt in den Spaltreaktor auf beispielsweise 1% erfordert nur noch eine 99%ige Spaltausbeute des Katalysators. Die entsprechenden Leistungserfordernisse für andere Pyrolysegaskonzentrationen sind vom Fachmann sehr leicht selbst zu errechnen. Unter einer *"wenigstens weitgehenden"* Spaltung wird daher eine solche Spaltausbeute verstanden, die im dem Spaltreaktor entströmenden Gas höchstens 300 ppm, besonders weniger als 250 ppm und insbesondere 100 ppm oder weniger Brennstoff-N-haltige Komponenten beläßt.

Eine weitere Möglichkeit zur Regelung der Spaltleistung des Katalysators besteht in der geeigneten Wahl der Verweildauer der zu spaltenden Brennstoff-N-haltigen Gaskomponente im Spaltreaktor. In der Regel sollte die Verweildauer etwa 0,1 bis 10 Sekunden betragen, wobei Verweildauern von 0,2 bis 5 Sekunden und insbesondere 0,3 bis 3 Sekunden besonders bevorzugt sind. In der Regel lassen sich mit Verweildauern im Bereich von etwa 0,5 bis 2,5 Sekunden sehr gute Ergebnisse erzielen. Als die Wahl der Verweildauer entscheidende Parameter kommen beispielsweise in Frage: Material des Katalysators, Geometrie des Katalysators, Druckverlust über den Katalysator, Turbulenzgrad etc.

Die Verweildauer der zu spaltenden Brennstoff-N-haltigen Gaskomponente im Spaltreaktor ist auch von dessen Temperatur abhängig. In der Regel wird es so sein, daß mit zunehmender Temperatur des Spaltreaktors eine kürzere Verweildauer für eine wenigstens weitgehende Spaltung, beispielsweise des Pyrolysegases, notwendig ist. Während für den Spaltreaktor von etwa 700 bis 900°C die Verweildauer des Gases im Spaltreaktor etwa 0,5 bis 5 Sekunden betragen sollte, läßt sich bei einer Erhöhung der Temperatur die zur wenigstens weitgehenden Spaltung notwendige Verweildauer noch deutlich reduzieren. So ist es in Abhängigkeit von der Katalysatorwirksamkeit beispielsweise möglich, bei Spaltreaktortemperaturen von 900 bis etwa 1000°C mit Verweildauern von weniger als 0,5, bevorzugt weniger als 0,4 und insbesondere bevorzugt weniger als 0,3 Sekunden eine wenigstens weitgehende Spaltung von Pyrolysegas im Abgas zu erreichen.

Die durch das erfindungsgemäße Verfahren entsorgbaren Gasströme enthalten gegebenenfalls neben dem Pyrolysegas noch Komponenten, die sich auf den Katalysatorbetrieb störend auswirken können. Durch den in der Regel unter reduzierenden Bedingungen ablaufenden Betrieb des Spaltreaktors können kohlenwasserstoffhaltige oder zumindest weitgehend aus Kohlenwasserstoffen aufgebaute Verunreinigungen zur Rußbildung und damit kurzfristig zur Desaktivierung der Katalysatoroberfläche führen. Insbesondere Kohlenwasserstoffe wie Methan, Ethan, Propan sowie höhere, unverzweigte oder verzweigte Paraffine, unverzweigte oder verzweigte Olefine sowie Alkohole, wie beispielsweise Methanol, Ethanol, Propanol oder Butanol bewirken eine starke Rußbildung im Spaltreaktor. Hierdurch steigen, bedingt durch das Ausbleiben der Pyrolysegasspaltung, in der Regel schon nach kurzer Zeit die NOₓ-Werte über den gewünschten bzw. zulässigen Grenzwert an. Eine solche Rußbildung läßt sich dadurch verhindern, daß dem Abgasstrom eine geringe Menge Sauerstoff zugeführt wird, die gerade so groß ist, daß eine Oxidation der Verunreinigungen zu einem Gemisch aus Kohlenmonoxid und Wasserstoffgas stattfindet. In der Regel läßt sich eine solche Oxidation dadurch erreichen, daß etwa die Hälfte des zur vollständigen Verbrennung der Verunreinigungen notwendigen Sauerstoffs dem Abgas zugemischt wird. Durch die Sauerstoffzugabe wird üblicherweise kein Anstieg der NOₓ-Werte im Verbrennungsabgas beobachtet, sondern es lassen sich auf diese Weise Werte erreichen, die denen ohne kohlenwasserstoffhaltige Verunreinigungen im Abgas entsprechen.

In der Regel enthält Pyrolysegas etwa 0,01 bis etwa 99 Gew.-% Kohlenwasserstoffe.

Es ist zunächst für die Durchführung des erfindungsgemäßen Verfahrens unerheblich, woher der Gasstrom, der als Brennstoff-N-haltige Gaskomponente insbesondere HCN oder NH₃ oder ein Gemisch aus zwei oder mehr der Gaskomponenten NOₓ, HCN und NH₃ enthält, wobei bei der Anwesenheit von NH₃ zusätzlich noch mindestens NOₓ oder HCN vorliegt, stammt. Er kann beispielsweise direkt aus einer chemischen Reaktion an einem anderen als dem Verbrennungsort entstehen und dann, gegebenenfalls mit zeitlicher Verzögerung, zum Verbrennungsort transportiert werden, oder er kann direkt am Verbrennungsort erzeugt werden, bevorzugt durch Pyrolyse eines der eingangs genannten Nebenprodukte, wobei der im wesentlichen gasförmige Massenstrom dem Pyrolysegas entspricht.

Bevorzugt eignet sich das erfindungsgemäße Verfahren zur Entsorgung und thermischen Verwertung stickstoffhaltiger, organischer Spezies.

Gegenstand der Erfindung ist demnach auch ein Verfahren zur Verbrennung einer stickstoffhaltigen, organischen Spezies, bei dem eine stickstoffhaltige organische Spezies thermisch in einer Pyrolysevorrichtung zu einem, eine Brennstoff-N-haltige Gaskomponente, insbesondere HCN oder NH₃, oder ein Gemisch aus zwei oder mehr der Gaskomponenten NOₓ, HCN und NH₃, enthaltenden Gasstrom pyrolysiert wird, die Brennstoff-N-haltige Gaskomponente anschließend wenigstens weitgehend in ein Spaltgas, enthaltend die Spaltprodukte N₂, H₂ und gegebenenfalls CO, CO₂ oder H₂O, oder ein Gemisch aus zwei oder mehr davon gespalten, und die Spaltprodukte nachfolgend in einer Verbrennungsvorrichtung verbrannt werden.

In einer bevorzugten Ausführungsform der Erfindung wird der im wesentlichen gasförmige Massenstrom, vorzugsweise das Pyrolysegas, direkt am Verbrennungsort erzeugt. Besonders bevorzugt ist es, wenn die Erzeugung des Massenstroms wenigstens teilweise innerhalb des zur Verbrennung des Spaltgases vorgesehenen Brennraums stattfindet. Besonders bevorzugt ist es, wenn wenigstens ein Teil der zur Pyrolyse der Nebenprodukte erforderlichen Energie aus der Verbrennung der Spaltgase stammt.

Es ist im Rahmen der erfindungsgemäßen Verfahrens besonders bevorzugt, wenn die Pyrolyse der Nebenprodukte in einer Pyrolysevorrichtung (Vergaser) stattfindet, die direkt innerhalb des Brennraums einer zur Verbrennung der Spaltgase vorgesehenen Brennkammer angeordnet ist. Die Pyrolysevorrichtung mündet in einen Spaltreaktor, in dem die Spaltung der Pyrolysegase stattfindet. Die Verweildauer der Nebenprodukte in der Pyrolysevorrichtung wird mindestens so bemessen, daß eine vollständige Pyrolyse, insbesondere zu NH₃, HCN und/oder NOₓ stattfinden kann.

Vorteilhafterweise stammt die zur Pyrolyse der stickstoffhaltigen organischen Spezies erforderliche Energie wenigstens teilweise aus der Verbrennung der Spaltgase. In besonderen Fällen, beispielsweise aufgrund einer ungünstigen Geometrie des Brennraums oder aufgrund zu geringer Energieerzeugung bei der Verbrennung der Spaltgase, kann es jedoch vorkommen, daß die Pyrolyse eine externe Energiezufuhr erforderlich macht. Dies läßt sich beispielsweise durch die Zuschaltung eines Brenners in der Pyrolyseeinrichtung erreichen, wobei der Brenner vorteilhafterweise mit einem unterstöchiometrischen Luft/Gas-Gemisch betrieben wird.

Da viele im Rahmen des erfindungsgemäßen Verfahrens zu entsorgende Nebenprodukte im flüssigen oder festen Aggregatzustand vorliegen, ist es erforderlich und zweckmäßig, der Pyrolysevorrichtung eine Verdampfungsvorrichtung (Verdampfer) zuzuordnen, in der die zu pyrolysierenden Nebenprodukte in die Gasphase überführt werden. Die Verdampfungsvorrichtung kann in beliebigem räumlichen Verhältnis zur Pyrolyseeinrichtung angeordnet sein, vorteilhafterweise befindet sich die Verdampfungseinrichtung jedoch ebenfalls innerhalb der Brennkammer der Verbrennungseinrichtung. Auf diese Weise wird sichergestellt, daß wenigstens ein Teil der zur Verdampfung notwendigen Energie aus der Verbrennung der Spaltgase stammt. Die Nebenprodukte können auf beliebige Weise in den Verdampfer eingebracht werden, vorzugsweise findet jedoch eine Einspritzung in den Verdampfer statt, wobei die Nebenprodukte dem Verdampfer über eine Düse in zerstäubter Form zugeführt werden.

Die Nebenprodukte können in konzentrierter Form dem Verdampfer zugeführt werden, es können jedoch auch Lösungen oder in anderer Weise einspritzbar präparierte Zubereitungsformen des Nebenproduktes eingesetzt werden. Handelt es sich bei dem zu pyrolysierenden Nebenprodukt um einen Feststoff, so kann anstatt eines Verdampfers auch ein Feststoffvergaser eingesetzt werden.

Bei der Zuführung der zu pyrolisierenden stickstoffhaltigen organischen Spezies in den Verdampfer/Vergaser können weitere Substanzen, beispielsweise Luft, inerte Trägergase oder Wasserdampf der Verbrennungsvorrichtung zugeführt werden. Insofern sich eine zu pyrolysierende stickstoffhaltige organische Spezies in der Pyrolysevorrichtung nicht vollständig, d.h. möglichst ohne Rußbildung und ohne NOₓ-Bildung pyrolysieren läßt, wird die stickstoffhaltige organische Spezies vorzugsweise durch Zugabe von Luft (bei einem Mangel an Oxidationsmitteln, d.g. in der Regel bei einem C-Überschuß) oder einem Reduktionsmittel, wie H₂ oder NH₃ (In der Regel bei einem NOₓ- oder O-Überschuß) in unterstöchiometrischem Verhältnis, jeweils bezogen auf C, N oder O, vergast.

Die Durchführung des erfindungsgemäßen Verfahrens erfolgt vorzugsweise in Verbrennungsvorrichtungen unter Einsatz sogenannter Impulsbrenner. Impuls- oder Hochgeschwindigkeitsbrenner zeichnen sich dadurch aus, daß sie einen Düsenaustritt für die Verbrennungsluft besitzen, die den Hauptanteil des Verbrennungsluftmassenstroms ausmacht. Durch die mit hohem Austrittsimpuls aus der oder den Eintrittsdüsen ausströmende Verbrennungsluft kommt es in der Umgebung der Austrittsdüsen zu einer Injektorwirkung, durch die Verbrennungsabgase aus dem Heizraum angesaugt und der Verbrennungsluft zugemischt werden. Der Eintritt eines solchen Effekts ist stark von der Austritts- bzw. Strömungsgeschwindigkeit der den Düsen entweichenden Verbrennungsluft abhängig. In der Regel geht man davon aus, daß bei Impulsbrennern der im erfindungsgemäßen Verfahren vorteilhafterweise eingesetzten Art Austrittsgeschwindigkeiten von etwa 80 bis etwa 120 m/sec erforderlich sind. Bei entsprechender baulicher Anlage des Verbrennungsraums kann dieser Wert jedoch auch noch höher liegen. So ist die Durchführung des erfindungsgemäßen Verfahrens auch bei Austrittsgeschwindigkeiten von mehr als 130, 140 oder 150 m/sec problemlos möglich. Auch niedrigere Austrittsgeschwindigkeiten als 80 m/sec stellen für die Durchführung des hier beschriebenen Verfahrens kein Hindernis dar. So läßt sich ein entsprechender Gasrückstrom auch noch bei Austrittsgeschwindigkeiten von weniger als 80 m/sec, wie beispielsweise 70 oder 60 m/sec, verwirklichen. Austrittsgeschwindigkeiten von weniger als 60 m/sec erfordern zur Erzeugung eines genügend starken Abgasrückstroms eine spezielle Ausgestaltung der Brennkammer.

Unter Impulsbrennern im erfindungsgemäßen Sinne werden daher solche Brenner verstanden, bei denen die Austrittsgeschwindigkeit der Verbrennungsluft hoch genug ist, um einen ausreichenden Abgasrückstrom zu gewährleisten. Die Strömung der im Brennraum vorhandenen Heizgase in Richtung der Eintrittsdüsen für die Verbrennungsluft wird im folgenden auch als *"Rückstrom"* bezeichnet. Solche Impulsbrenner, die zunehmend fiir die Umwandlung von Brennstoffenergie in Wärme eingesetzt werden, werden in der Regel einstufig betrieben und stellen auch auf Grund der für sie benötigten einfachen baulichen Verhältnisse eine ausgezeichnete Basis für die Durchführung des erfindungsgemäßen Verfahrens dar.

Ein weiterer Gegenstand der Erfindung ist demnach eine Verbrennungsvorrichtung zur NOₓ-armen Verbrennung eines Gasstroms, der eine Brennstoff-N-haltige Gaskomponente, insbesondere HCN oder NH₃ oder ein Gemisch aus zwei oder mehr der Gaskomponenten NOₓ, HCN und NH₃ enthält, mindestens aufweisend
a) eine Brennkammer,
b) einen Brenner und
c) einen Spaltreaktor mit einer Zuführung für den Gasstrom,
wobei die mit dem Gasstrom in Kontakt tretende Oberfläche des Spaltreaktors mindestens ein zur katalytischen Spaltung der Brennstoff-N-haltigen Gaskomponente in N₂, H₂ oder CO, oder ein Gemisch aus zwei oder mehr davon, geeignetes Material aufweist oder der Spaltreaktor im Innenraum ein solches Material enthält, und wobei die Katalytische Spaltung der Brennstoff-N-haltigen Gaskomponente vor der Verbrennung erfolgt.

Bevorzugt handelt es sich bei dem Brenner um einen Impulsbrenner.

In einer bevorzugten Ausführungsform weist die Verbrennungsvorrichtung Mittel zur Beheizung des Spaltreaktors und/oder der Verbrennungsluft auf.

Die Beschickung der Brennkammer mit dem Spaltgas erfolgt zweckmäßigerweise durch die Austrittsöffnungen der Spaltreaktoren selbst. Zu diesem Zweck werden die rohrförmigen Spaltreaktoren mit der Austrittsöffnung axial oder radial zur Eintrittsrichtung der Verbrennungsluft und des Brenngases durch entsprechende Durchtrittsöffnungen in einer Ebene zum Eintritt der Verbrennungsluft und des Brenngases in den Brennraum eingeführt. Gegebenenfalls kann der Spaltreaktor bei Minimierung der geometrischen Abmessungen und gleichzeitiger Maximierung der Verweildauer des Gases im Spaltreaktor eine spiralförmig gewundene Raumform (Wendelform) einnehmen. Denkbar sind hier neben der Wendelform alle solchen Raumformen, die bei relativ geringen äußeren Abmessungen eine Maximierung der Verweildauer im Spaltreaktor erreichen. So wäre z.B. auch eine Lamellenform oder eine mehrstufige Wendelform, wobei Windungen unterschiedlichen Durchmessers konzentrisch ineinander angeordnet sind, denkbar.

In einer weiteren, vorteilhaften Ausführungsform ist der das Katalysatormetall enthaltende Spaltreaktor spiralförmig entlang der Innenwand der Brennkammer angeordnet. Der Spaltreaktor kann dabei direkt an der Innenwand der Brennkammer angeordnet sein, er kann gegebenenfalls jedoch auch einen, gegebenenfalls über die Gesamtlänge des Spaltreaktors variablen, Abstand zur Innenwand aufweisen.

Die Länge des Spaltreaktors und damit die Zahl der Windungen sowie deren Steigung wird an die Strömungsgeschwindigkeit des Brennstoff-N-haltigen Gases angepaßt, so daß dessen Verweilzeiten im Spaltreaktor in der schon dargelegten Form eingehalten werden. Diese Längenanpassung kann beispielsweise dadurch vorgenommen werden, daß die Beschickung des Spaltreaktors mit dem ammoniakhaltigen Gasgemisch an einer beliebigen vorbestimmten Stelle längs des Spaltreaktors vorgenommen wird. Indem eine Vielzahl solcher Einspeisungsstellen am Spaltreaktor vorgesehen wird, kann die Verweildauer des zu spaltenden ammoniakhaltigen Gasgemischs in weiten Grenzen, ohne Veränderung der Strömungsgeschwindigkeit geregelt werden.

Die Beschickung des Spaltreaktors mit dem Brennstoff-N-haltigen Gas kann so an einer beliebigen Stelle längs des Reaktors geschehen, solange die notwendige Verweilzeit des Gases im Spaltreaktor eingehalten wird. Der Austritt der Spaltgase kann sowohl axial als auch radial zum Strom der Verbrennungsluft erfolgen; im Falle einer radialen Einspeisung sollte die Austrittsgeschwindigkeit der Spaltgase in die Brennkammer jedoch Werte von ¹/₂ bis ¹/₁₅ der Strömungsgeschwindigkeit der Verbrennungsluft nicht überschreiten. Vorteilhafterweise liegt beim radialen Lufteintritt die Strömungsgeschwindigkeit der Spaltgase bei einem Wert von etwa einem Zehntel der Strömungsgeschwindigkeit der Verbrennungsluft. In typischen Impulsbrennern entspricht dies einer Austrittsgeschwindigkeit der Spaltgase von etwa 8 bis 60 Metern pro Sekunde. Neben dem axialen oder radialen Eintritt der Spaltgase relativ zur Austrittsrichtung der Verbrennungsluft sind auch noch alle anderen Winkel zwischen 0° und 180° relativ zur Achse des Verbrennungsluftaustritts denkbar, wobei in der Regel jedoch Winkel zwischen 0° und 90°, insbesondere etwa 0° oder etwa 90°, bevorzugt sind. Entsprechende Anordnungen kann der Fachmann leicht anhand der Effektivität des Verbrennungsvorgangs kontrollieren.

Je nach Größe der Brennkammer, Leistung des Brenners sowie zu entsorgender Brennstoff-N-haltiger Gasmenge können ein oder mehrere Spaltreaktor/en in der Brennkammer angebracht sein. Die Spaltreaktoren werden dabei vorzugsweise konzentrisch um einen gedachten Kreis mit der Austrittsöffnung des Brenngases als Mittelpunkt und dem Radius der Austrittsöffnung der Verbrennungsluft angeordnet, es sind jedoch auch andere geometrische Anordnungen denkbar. Ebenfalls ist es denkbar, daß die Austrittsöffnungen der Spaltreaktoren nicht im Inneren der Brennkammer liegen, sondern die Zerlegung des Brennstoff-N-haltigen Gases in das Spaltgas an anderer Stelle stattgefunden hat. Die Einspeisung des daraus entstandenen Gasgemischs muß jedoch immer im Rückstromgebiet der Verbrennungsabgase liegen.

Es ist jedoch für die Durchführung des erfindungsgemäßen Verfahrens vorteilhaft, wenn der Spaltreaktor mindestens eine Austrittsöffnung aufweist, die sich in der Brennkammer in einem Rückstromgebiet von Verbrennungsabgas befindet.

Ein weiteres Kennzeichen der vorliegenden Erfindung ist es, daß die Spaltreaktoren zur Spaltung des Pyrolysegases beheizbar sind. Es ist insbesondere dann vorteilhaft, wenn der Spaltreaktor durch die aus der Feuerungsleistung des Brenners entstehende Energie beheizt werden kann. In einer besonderen Ausführungsform der erfindungsgemäßen Vorrichtung wird dies dadurch erreicht, daß der Spaltreaktor der Länge nach zumindest teilweise in das Innere der Brennkammer hineinragt.

In einer bevorzugten Ausführungsform der Erfindung weist die erfindungsgemäße Vorrichtung eine
d) Pyrolysevorrichtung
auf. Die Pyrolysevorrichtung kann sich in beliebiger räumlicher Anordnung zu Brennkammer, Brenner und Spaltreaktor befinden, vorzugsweise befindet sich die Pyrolysevorrichtung jedoch innerhalb einer Brennkammer. Die Pyrolysevorrichtung verfügt über eine durch Gasfluß kommunizierende Verbindung zum mindestens einen Spaltreaktor.

In einer weiteren bevorzugten Ausführungsform weist die erfindungsgemäße Vorrichtung eine
e) Verdampfer-/Vergaservorrichtung
auf, welche die zu pyrolysierenden Stoffe in einen Zustand überführt, in dem sie in die Pyrolysevorrichtung eingespeist werden können. Die Verdampfer/Vergaservorrichtung kann innerhalb der Brennkammer angeordnet werden, so daß die zur Verdampfung/Vergasung des zu pyrolysierenden Stoffes notwendige Energie direkt aus dem in der Brennkammer stattfindenden Verbrennungsvorgang erhältlich ist. In der Regel ist eine (1) Verdampfer-/Vergaservorrichtung für den im Rahmen der vorliegenden Erfindung zu erfüllenden Zweck ausreichend, in der Regel können der Verdampfer-/Vergaservorrichtung auch gleichzeitig, beispielsweise über verschiedene Zuleitungen, verschiedene zu verdampfende/vergasende Stoffe zugeführt werden. Gegebenenfalls können jedoch (beispielsweise um eine bestimmte Stöchiometrie einzuhalten) mehrere Verdampfer-/Vergaservorrichtungen in der Brennkammer angeordnet sein.

Die Verdampfer-/Vergaservorrichtung kann aus einem oder aus mehreren Materialien bestehen.

In der Zeichnung ist beispielhaft eine aus einer Vielzahl möglicher erfindungsgemäßer Vorrichtungen ausgewählte Vorrichtung zur Durchführung des erfindungsgemäßen Verfahrens beschrieben. Es zeigt die
- Figur 1: eine Ausgestaltung eines Brenners mit Spaltreaktoren, die
- Figur 2: einen Spaltreaktor mit einer Zuleitung, die
- Figur 3: einen weiteren Spaltreaktor mit einer Zuleitung, die
- Figur 4: eine schematische Ansicht einer Strömungsführung durch einen zur Wendelform gewundenen Spaltreaktor, die
- Fig. 5: eine schematische Übersicht über eine zur Durchführung des Verfahrens geeignete Vorrichtung mit einem Verdampfer und einem Spaltreaktor, die
- Fig. 6: den Verdampfer im Längsschnitt, die
- Fig. 7: einen zur Wendelform gewundenen Spaltreaktor im Längsschnitt und die
- Fig. 8: eine weitere schematische Übersicht über eine weitere Anordnung zur Durchführung des erfindungsgemäßen Verfahrens.

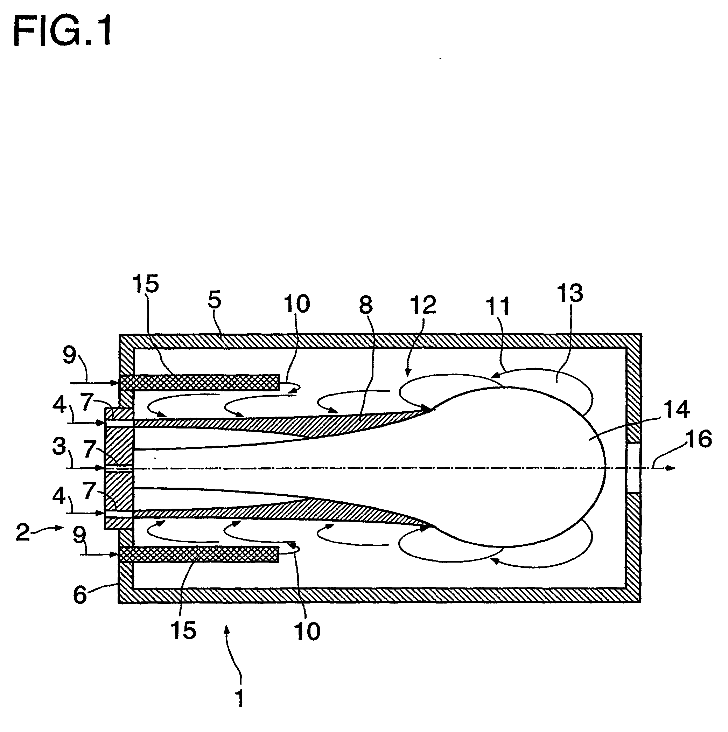

Figur 1 zeigt eine Ausgestaltung einer erfindungsgemäßen Vorrichtung 1, wobei als Brenner 2 ein sogenannter Flox®-Brenner, der mit Erdgas 3 und Verbrennungsluft 4 betrieben wird, eingesetzt wird. Ein solcher Flox®-Brenner wird in der EP-B1-0 463 218 beschrieben. Bezüglich des Brenners 2 wird im Rahmen dieser Schrift vollinhaltlich auf die EP-B 0 463 218 Bezug genommen.

In einer ausgemauerten Brennkammer 5 befindet sich in einer Stirnwand 6 ein Flox®-Brenner 2, in dem die Verbrennungsluft 4 über spezielle Düsen 7 mit einem hohen Eintrittsimpuls in die Brennkammer 5 befördert wird. Eine Einsaugleistung eines Freistrahles 8 aus der Verbrennungsluft 4 mit einem, aus einem ammoniakhaltigen Abgas 9 in Stickstoff und Wasserstoff aufgespaltenen Gasgemisch 10 ist so groß, daß es zur Ausbildung einer starken Rückströmung 11 und damit zu einem kräftigen Rückstromgebiet 12 kommt. Diese Rückströmung 11 reißt auch Verbrennungsabgas 13 mit. Dadurch kommt das Erdgas 3 nicht direkt mit Verbrennungsluft 4, sondern mit einem Verbrennungsluft-Verbrennungsabgas-Gemisch in Kontakt. Es bildet sich dadurch keine Flamme aus, sondern ein großvolumiger Reaktionsraum mit einer großen Reaktionszone 14 mit einer deutlich niedrigeren Temperatur als in üblichen Flammen. Das ammoniakhaltige Abgas 9 wird über Spaltreaktoren 15, die sich in der Brennkammer 5 befinden und durch diese beheizt werden, in das Rückstromgebiet 12 der Verbrennungsabgase 13 zugegeben. Das aus den Spaltreaktoren 15 austretende wasserstoffreiche Gasgemisch 10 wird von der Rückströmung 11 aufgenommen und nahezu flammenlos oxidiert. Während dann ein Teil der Verbrennungsabgase 13 wieder zu dem Brenner 2 zurückgezugen wird, verläßt ein anderer Teil die Brennkammer 5 in Richtung Kamin, angedeutet durch den Pfeil 16.

Ein Vorteil dieser Anordnung der Spaltreaktoren 15 zur Spaltung des Ammoniakanteils im ammoniakhaltigen Gasgemisch 10 ist die Beheizbarkeit durch die aus der Feuerungsleistung des Brenners 2 entstehende Energie. Dieses wird erreicht, indem der Spaltreaktor 15 bzw. die Spaltreaktoren 15 sich zumindest teilweise, vorzugsweise jedoch vollständig im Inneren der Brennkammer 5 befinden.

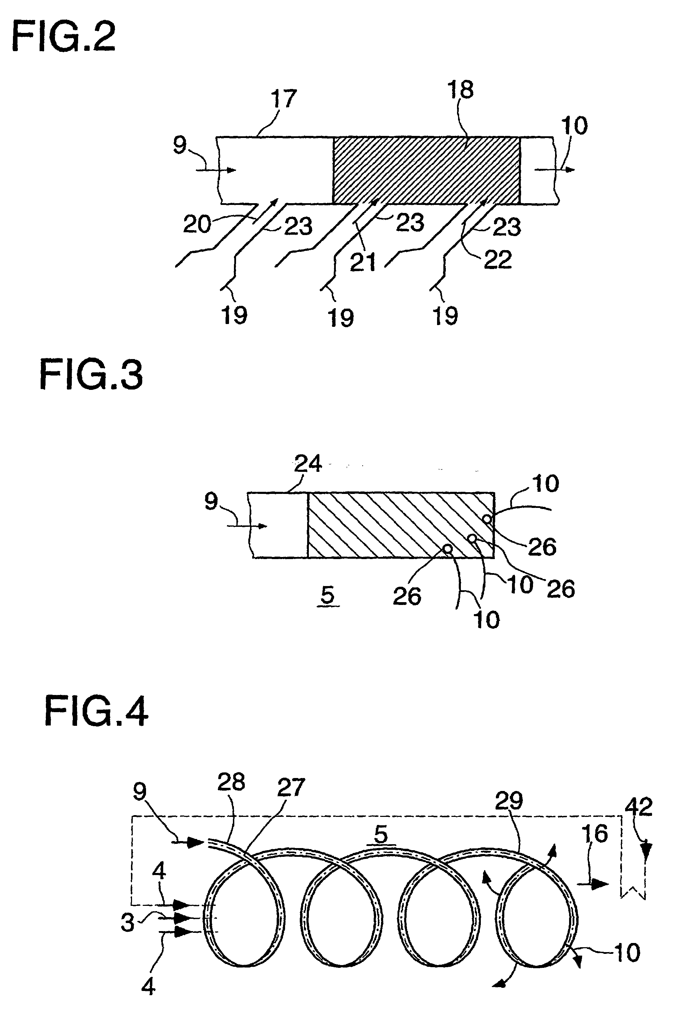

Figur 2 zeigt eine Zuleitung 17 mit einem darin angeordneten Spaltreaktor 18. In die Zuleitung 17 strömt das ammoniakhaltige Abgas 9 ein. Den Spaltreaktor 18 verläßt das Gasgemisch 10 aus Wasserstoff und Stickstoff. Über jeweils eine Zustromleitung 19 tritt an unterschiedlichen Orten ein erster 20, zweiter 21 und dritter 22 Zustrom in die Zuleitung 17 mittels Gaszuführungsdüsen 23 ein. Die Zuströme 20, 21, 22 werden so gesteuert, daß eine gewünschte Temperatur des Spaltreaktors 18 eingehalten bzw. eine Verunreinigung des Spaltreaktors 18 vermieden wird. Sie enthalten vorteilhafterweise Sauerstoff, Stickkstoff oder ein Gemisch aus beiden.

Figur 3 zeigt eine weitere Zuleitung 24, in den das ammoniakhaltige Abgas 9 eintritt. Ein Spaltreaktor 25 ist diesmal so in der Zuleitung 24 angeordnet, daß das Gasgemisch 10 direkt aus dem Spaltreaktor 25 mittels Austrittsöffnungen 26 in die Brennkammer 5 eintritt. Die Austrittsöffnungen 26 sind insbesonders so angeordnet, daß das einströmende Gasgemisch 10 jeweils vollständig auf kürzestem Wege in die in dieser Figur nicht dargestellte Rückströmung eintritt.

Figur 4 zeigt eine schematische Ansicht eines Strömungsweges 27 durch eine andere Zuleitung 28. Diese ist um die in die Brennkammer 5 einströmende Erdgas 3 und Verbrennungsluft 4 wendelförmig angeordnet. Aber auch andere Ausgestaltungen wie beipielsweise eine Spirale oder ähnliches ist möglich. Durch die Art des Strömungsweges 27 wird die Möglichkeit der Erhitzung des in die Zuleitung 28 einströmenden ammoniakhaltigen Abgases 9 bis zu äußerst hohen Temperaturen entlang des Strömungsweges 27 gewährleistet. Das Ende der Zuleitung 28 bildet einen Ring 29 aus, aus welchem das Gasgemisch 10 austritt. Die in die Brennkammer 5 eintretende Verbrennungsluft 4 wird im übrigen durch die aus der Brennkammer 5 austretenden Verbrennungsabgase 16 auf eine gewünschte Temperatur aufgeheizt, was gestrichelt angedeutet ist.

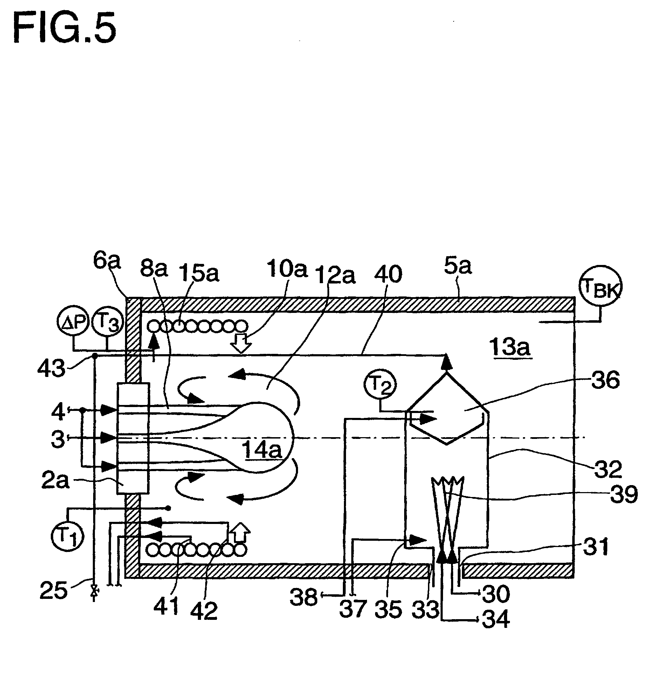

Gemäß Fig. 5 befindet sich in einer ausgemauerten Brennkammer 5a in der Stirnwand 6a ein Flox®-Brenner 2a, der mit Erdgas 3a und Verbrennungsluft 4 betrieben wird. Im Flox®-Brenner 2a wird die Verbrennungsluft 4 über spezielle Düsen zugegeben, welche die Verbrennungsluft 4 mit einem hohen Eintrittsimpuls als Luft-Freistrahlen 8a in die Brennkammer 1 befördern.

Die Einsaugleistung der Luft-Freistrahlen 8a ist so groß, daß es zur Ausbildung eines kräftigen Verbrennungsabgas-Rückstromgebietes (Rezirkulationsströmung) 12a kommt, das durch eine hohe Rückvermischung der Verbrennungsabgase mit der Verbrennungsluft 4 gekennzeichnet ist. Dadurch kommt das Erdgas 3 nicht direkt mit Verbrennungsluft 4, sondern mit einem Verbrennungsluft-Rauchgas-Gemisch in Kontakt. Es bildet sich dadurch keine Flamme aus, sondern eine großvolumige Reaktionszone 14a, mit einer deutlich niedrigeren Temperatur als in üblichen Flammen.

Die stickstoffhaltigen, flüssigen Spezies 30 werden über eine Zerstäuberdüse 31 in einen metallischen Behälter 32, der sich in der Brennkammer 5a befindet, zugegeben. In den gleichen Behälter 32 kann gegebenenfalls über eine zweite Zerstäuberdüse 33 Wasser 34 zugegeben werden. Weiterhin kann an mindestens zwei Stellen 35 und 36 im Behälter 32 Luft 37, 38 zugegeben werden, wobei zur Temperaturregelung und zum Verhindern von Verrußung die Luftzugabe so dosiert wird, daß pro C-Atom im eingespeisten, zu verdampfenden/vergasenden Stoff etwa ein O-Atom zugegeben wird.

Die verdampfte und gegebenenfalls bereits teilweise vergaste stickstoffhaltige Spezies 39, gegebenenfalls im Gemisch mit Wasser, wird anschließend in ein vergleichsweise dünnes Rohr 40 (Pyrolysevorrichtung) geleitet. Dort wird die Strömung erheblich beschleunigt, das zu spaltende Brennstoff-N-haltige Gasgemisch homogenisiert und pyrolysiert.

Im Anschluß durchläuft das Gas einen Spaltreaktor 15a, der sich ebenfalls in der Brennkammer 5a befindet, wobei das zu spaltende Gas zu Spaltgas 10a umgewandelt wird.

Danach wird das Spaltgas 10a aus Öffnungen im Spaltreaktor 15a in das Rückstromgebiet 12a des Flox®-Brenners 2a eingespeist. Das aus dem Spaltreaktor 15a austretende H2-reiche Spaltgas 10a wird nahezu flammenlos oxidiert. Es werden dadurch NOx-Konzentrationen im Verbrennungsabgas 13a von weniger als 100 mg/m3 erreicht, was sonst nur mit einer aufwendigen Reinigung des Verbrennungsabgases (Rauchgasreinigung) möglich ist.

An bestimmten Entnahmestellen 41, 42 des Spaltreaktors 15a ist eine kontinuierliche oder diskontinuierliche Entnahme des Spaltgases 10a zur Analyse möglich.

Weiterhin können dem Spaltreaktor 15a über eine Einspeisungsstelle 42 zusammen mit dem aus dem Behälter 32 über die Pyrolysevorrichtung 40 zugeführten Pyrolysegas kontinuierlich oder diskontinuierlich weitere über die Leitung 44 zugeführte Gase wie CO₂, CO, H₂, NOₓ oder O₂ sowie NH₃ oder HCN zugemischt werden.

Temperaturmessungen sind beispielhaft an verschiedenen Stellen vorgesehen. Im Bereich des Spaltreaktors 15a wird eine Temperatur T1 gemessen. In dem als Verdampfer oder Vergaser bezeichneten Behälter 32 wird an dessen Austritt die Temperatur T2 gemessen. Am Eintritt des Gemisches in den Spaltreaktor 15a wird der Druck Δp und die Temperatur T3 bestimmt. Schließlich wird die Temperatur des Verbrennungsabgases 13a TBK gemessen.

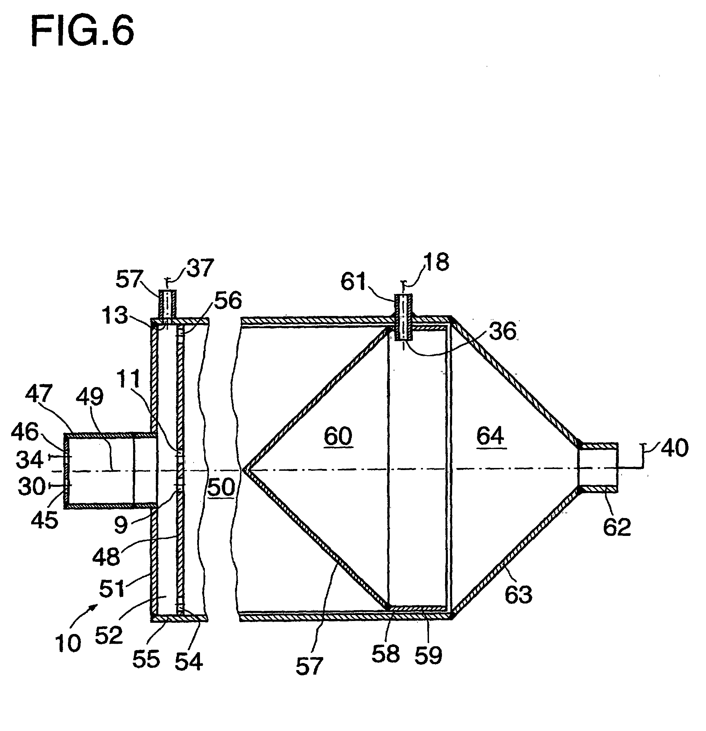

Figur 6 beschreibt den in der Brennkammer 5a angeordneten, als Verdampfer/Vergaser wirkenden Behälter 32 im Detail. An der Eintrittseite des Behälters 32 befindet sich ein mit Anschlüssen 45, 46 versehener Stutzen 47. Die Anschlüsse 45, 46 sind mit in einer Behälterinnenwand 48 um eine Mittelachse 49 herum angeordneten Zerstäuberdüsen 9, 11 in nicht dargestellter Weise verbunden.

Über diese Zerstäuberdüsen 31, 33 werden die stickstoffhaltigen, flüssigen Spezies 30 und gegebenenfalls Wasser 34 in den Innenraum 50 des Behälters 32 eingespritzt und vermischen sich dort zu einem Gemisch.

Zwischen der Behälterinnenwand 48 und einer Behälteraußenwand 51 befindet sich ein Zwischenraum 52, dem an der Stelle 35 über einen Anschlußstutzen 53 Luft 37 zugeführt werden kann. Diese Luft tritt über in der Nähe des Behältermantels 54 in der Behälterinnenwand 48 angeordnete Öffnungen 55, 56 in den Innenraum 50 des Behälters 32 ein.

Zur Austrittseite des Behälters 32 hin ist der Innenraum 50 durch einen sich konisch erweiternden Einbau 57 bis auf einen Spalt 58 zwischen diesem und dem Behältermantel 54 begrenzt, wobei der Einbau 57 ein sich an den konisch erweiternden Teil anschließendes zylindrisches Teil 59 aufweist, so daß das Gemisch mit hoher Strömungsgeschwindigkeit durch den Spalt strömt.

In den durch den Einbau 57 und 59 begrenzten Raum 60 kann an der Stelle 36 in der Wand des zylindrischen Teils 59 über einen Anschlußstutzen 61 Luft oder Dampf 38 eingespeist werden. Die Luft oder der Dampf 38 werden in einer von einer sich zu einem Auslaßstutzen 62 hin konisch verjüngenden Behälterstirnseite 63 und dem Einbau 57 und 59 begrenzten Mischkammer 64 mit dem durch den Spalt 58 strömenden Gemisch aus dem Innenraum 50 vermischt und strömt über den Auslaßstutzen in die Pyrolysevorrichtung 40 ein.

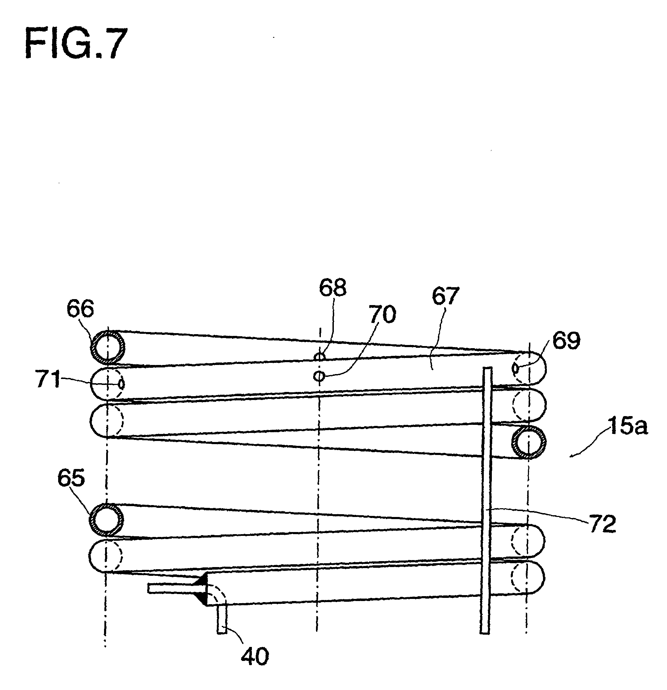

Über die Pyrolysevorrichtung 40 wird das Gemisch dem Spaltreaktor 15a zugeführt, der in Fig. 7 im Detail dargestellt ist. Der Spaltreaktor 15a besteht aus einem mehrfach gewundenen Rohr 65, welches an der Eintrittseite mit der Pyrolysevorrichtung 40 verbunden ist und am anderen Ende mit einer Platte 66 verschlossen ist. Das Rohr 65 ist derart gewunden, daß die Windungen in der Art einer zylindrischen Schraubenfeder übereinanderliegen. In der letzten Windung 67 sind vier Auslaßöffnungen 68-71 für das Spaltgas um jeweils 90 Grad versetzt angeordnet. Der Austritt des Spaltgases erfolgt radial zum Strom der Verbrennungsluft.

Die Entnahme von Spaltgas aus dem Spaltreaktor zur Analyse erfolgt über eine mit der jeweiligen Entnahmestelle verbundene Leitung 72.

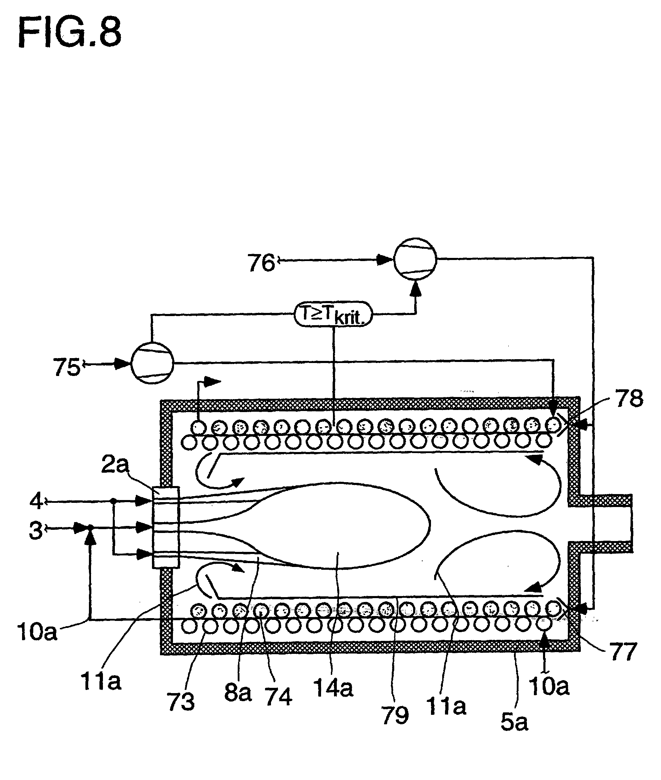

In Fig. 8 wird eine Vorrichtung zur zusätzlichen Ausschleusung der von der Verbrennung stammenden thermischen Energie zum Zweck der Vermeidung der örtlichen Überhitzung in der Brenkammer 1 gezeigt.

Ein wesentlicher Unterschied gegenüber der in Fig. 1 dargestellten Vorrichtung besteht darin, daß das Spaltgas 10a am vom Brenner 2a entgegengesetzten Ende der Brennkammer 5a einem gewendelten Spaltreaktor 73 zugeführt und über einen mit dem Spaltreaktor 73 verkoppelten gewendelten Wärmetauscher 74 im Gleichstrom mit einem Kühlmedium 75 allmählich aufgeheizt und kontrolliert umgesetzt wird. Der Austritt des Spaltgases kann (in der Zeichnung nicht dargestellt) am oberen, in Richtung der Auslaßöffnung fiir die Verbrennungsabgase hin liegenden Ende des Spaltreaktors 73 Öffnungen im Spaltreaktor erfolgen (nicht dargestellt). Vorzugsweise liegen die Öffnungen des Spaltreaktors hinter Leitblechen 79. Es ist jedoch ebenso möglich, das Spaltgas nach der Spaltung im Spaltreaktor dem Erdgas 3 zuzumischen. Beide Betriebsarten erlauben eine Minimierung des Erdgasverbrauchs.

Der Wärmetauscher kann als Luft-, Öl- oder Wasserdampferhitzer ausgeführt sein. Eine weitere Ausschleusung von thermischer Energie kann zusätzlich bei Überschreiten einer kritischen Temperatur Tₖᵣᵢₜ des Kühlmediums, beispielsweise 1000 Grad Celsius, durch eine Einspritzung von Wasser 76 an den Stellen 77, 78 realisiert werden. Die Stellen 77, 78 sind so ausgewählt, daß das Wasser 76 das in den Spaltreaktor 73 eintretende Spaltgas 10a und das in den Wärmetauscher 74 eintretende Kühlmedium 75 weiter abkühlt.

Um die durch den flammenlosen Brenner 2a erzeugte Rückströmung 11a zu verstärken, sind zwischen am Spaltreaktor 73 bzw. dem mit diesem verkoppelten Wärmetauscher 74 und der Reaktionszone 14a entsprechend dimensionierte Leitbleche 79 angeordnet. Dabei wird die Injektorwirkung der Luft-Freistrahlen 8a zur Erzeugung der Rezirkulationsströmung 11a genutzt.

Die folgenden Beispiele sollen die Vorteile des erfindungsgemäßen Verfahrens und der dazugehörigen Vorrichtung verdeutlichen.

### BEISPIELE

### Beispiel 1

In eine ausgemauerte Brennkammer mit einem Innenvolumen von ca. 5 m³ wurden ein Flox®-Brenner, Typ FLOX ELS 1.3 (Luvomat) und sechs Spaltreaktoren gemäß Fig. 1 eingebaut. Die Spaltreaktoren waren mit einem Nickeloxidkatalysator der BASF AG (Typ G 1-22) gefüllt. Über den Brenner wurden 11 m³/h i.N. Erdgas und 148 m³/h im Normzustand vorgewärmte Luft (290°C) zugeführt.

Über die sechs Spaltreaktoren wurde ein Stickstoff-Ammoniak-Gemisch zugeführt.

Hierbei betrug der Anteil an Stickstoff 10 m³/h im Normzustand, der Anteil an Ammoniak 5 m³/h im Normzustand Es stellte sich eine Brennraumtemperatur von ca. 1050°C ein. Die Gesamt-NOₓ-Emissionen betrugen 18,5 mg/m³ im Normzustand, bezogen auf 3% O₂ im trockenen Rauchgas; die CO-Emission lag unter 10 ppm, die Ammoniak-Emission deutlich unter 5 mg/m³ im Normzustand

### Beispiel 2

Mischt man dagegen den gleichen Ammoniakstrom in das Erdgas ein und verbrennt dieses Gemisch, ergeben sich Gesamt-NOₓ-Emissionen von mehr als 3000 mg/m³ im Normzustand, bezogen auf 3% O₂ im trockenen Rauchgas.

### Beispiel 3

In eine Brennkammer mit Flox®-Brenner gemäß Beispiel 1 wurde entlang der Innenseite ein spiralförmiger Spaltreaktor aus Edelstahl nach DIN 17440, X6CrNiTi 18 10 mit radialen Austrittsöffnungen für die Spaltgase eingebaut. Die Länge des Spaltreaktors wurde dabei so gewählt, daß eine Verweildauer des Abgases im Spaltreaktor von 2 Sekunden erreicht wurde. Über den Brenner wurden 11 m³/h im Normzustand Erdgas und 143 m³/h im Normzustand vorgewärmte Luft (290°C) zugeführt. Über den Spaltreaktor wurde ein Stickstoff-Ammoniak-Gemisch mit 10 m³/h im Normzustand Stickstoff und 5 m³/h im NormzustandAmmoniak zugeführt. Es stellte sich eine Brennraumtemperatur von etwa 1050°C ein. Die Gesamt-NOₓ-Emissionen betrugen 34 mg/m³ im Normzustand, bezogen auf 3% O₂ im trockenen Rauchgas; die CO-Emission lag unter 10 ppm, die Ammoniak-Emission deutlich unter 5 mg/m³ im Normzustand

### Beispiel 4

In einer Anordnung entsprechend Beispiel 3 wurden 10,5 m³/h Erdgas sowie 154 m³/h Luft dem Brenner zugeführt. Über den Spaltreaktor wurden 10 m³/h im Normzustand Stickstoff, 5 m³/h im Normzustand Ammoniak sowie 0,5 m³/h im Normzustand Propan zugeführt. Die NOₓ-Emissionen betrugen 178 mg/m³ im Normzustand

### Beispiel 5

Es wurde verfahren wie in Beispiel 4, jedoch wurden dem Abgasstrom im Spaltreaktor noch 6 m³/h im Normzustand Luft zugeführt. Die NOₓ-Emissionen betrugen 21 mg/m³.

So gelingt es bei der Verbrennung von ammoniakhaltigem Abgas die NOₓ-Emissionen auf unter 20 ppm im Verbrennungsabgas zu begrenzen, selbst bei Temperaturen bis zu 1000°C. Aufwendige Entstickungsmaßnahmen können damit bei der Verbrennung von ammoniakhaltigem Abgas entfallen.

### Beispiel 5:

In eine ausgemauerte Brennkammer mit einem Innenvolumen von ca. 5 m³ wurde ein Flox®-Brenner, Typ FLOX ELS 1.3 (Luvomat) und ein wendelförmiger leerer Rohrreaktor aus austenitischem Stahl gemäß Fig. 2 eingebaut. Über den Brenner wurden 12 m³/h i. N. Erdgas und 150 m³/h i. N. vorgewärmte Luft (290 °C) zugeführt. Über den Wendelrohrreaktor wurde ein Stickstoff/Ammoniak/NO-Gemisch -Gemisch zugeführt. Hierbei betrug der Strom an Stickstoff 10 m³/h i. N., an Ammoniak 5 m³/h i. N. und an NO 2 m³/h i. N.. Es stellte sich eine Brennkammertemperatur von ca. 1050 °C ein. Die Gesamt-NOₓ-Emissionen betrugen 30 mg/m³ i. N., bez. auf 3 % O₂ i. tr. Rg., die CO-Emission lag unter 10 ppm, die NH₃-Emission deutlich unter 5 mg/m³ i. N.. Bei Zugabe des gleichen Gemischstromes in das Erdgas, ergeben sich Gesamt-NOₓ-Emissionen von mehr als 9000 mg/m³ i. N., bez. auf 3 % O₂ i. tr. Rg..

### Beispiel 6:

In eine ausgemauerte Brennkammer mit einem Innenvolumen von ca. 5 m³ wurde ein Flox®-Brenner, Typ FLOX ELS 1.3 (Luvomat) und ein wendelförmiger leerer Rohrreaktor aus austenitischem Stahl gemäß Fig. 2 eingebaut. Über den Brenner wurden 10 m³/h i. N. Erdgas und 144 m³/h i. N. vorgewärmte Luft (290 °C) zugeführt. Über einen gasbeheizten Verdampfer wurden 0,81 kg/h Acrylnitril verdampft. Der Verdampfer wurde mit 13,44 m³/h i. N. N₂ und 5,22 m³/h i. N. NH₃ als Trägergas gespült. Das dabei entstehende Gas/Dampf-Gemisch wurde dem Wendelrohrreaktor zugeführt. Es stellte sich eine Brennraumtemperatur von ca. 1000 °C ein. Die Gesamt-NOₓ-Emissionen betrugen 50 mg/m³ i. N., bez. auf 3 % O₂ i. tr. Rg., die CO-Emission lag unter 10 ppm, die NH₃-Emission deutlich unter 5 mg/m³ i. N.. Bei Zugabe des gleichen Gemischstromes in das Erdgas, ergeben sich Gesamt-NOₓ-Emissionen von mehr als 8000 mg/m³ i. N., bez. auf 3 % O₂ i. tr. Rg..

### Beispiel 7:

In eine ausgemauerte Brennkammer mit einem Innenvolumen von ca. 5 m³ wurde ein Flox®-Brenner, Typ FLOX ELS 1.3 (Luvomat) und ein wendelförmiger leerer Rohrreaktor aus austenitischem Stahl gemäß Fig. 2, sowie ein Verdampfer/Vergaserreaktor gemäß Fig. 1 und 3 eingebaut. Über den Brenner wurden 9 m³/h i. N. Erdgas und 144 m³/h i. N. vorgewärmte Luft (290 °C) zugeführt. In den Verdampfer/Vergaserreaktor wurden über eine mit N₂ betriebene Zweistoffzerstäuberdüse 5 kg/h Nitrobenzol zugegeben. Außerdem wurden über eine zweite gleichartige Zerstäuberdüse 5,1 kg/h Wasser eingeblasen. Der Verdampfer wurde außerdem mit 10 m³/h i. N. N₂ und 8,3 m³/h i. N. Luft beaufschlagt. Das im Verdampfer/Vergaser entstehende Gas/Dampf-Gemisch wurde dem Wendelrohrreaktor zugeführt und anschließend in die Brennkammer, in das Rückstromgebiet des Brenners entlassen. Es stellte sich eine Brennraumtemperatur von ca. 1000 °C ein. Die Gesamt-NOₓ-Emissionen betrugen 70 mg/m³ i. N., bez. auf 3 % O₂ i. tr. Rg., die CO-Emission lag unter 10 ppm.

### Bezugszeichenliste

- 1: Vorrichtung
- 2: Brenner
- 2a: Flox®-Brenner
- 3: Erdgas
- 4: Verbrennungsluft
- 5, 5a: Brennkammer
- 6, 6a: Stirnwand
- 7: Düse
- 8,8a: Freistrahl
- 9: ammoniakhaltiges Abgas
- 10, 10a: Spaltgas
- 11, 11a: Rückströmung
- 12, 12a: Rückstromgebiet
- 13, 13a: Verbrennungsabgas
- 14, 14a: Reaktionszone
- 15, 15a: Spaltreaktor
- 16: Verbrennungsabgas
- 17: Zuleitung
- 18: Spaltreaktor
- 19: Zustromleitung
- 20: erster Zustrom
- 21: zweiter Zustrom
- 22: dritter Zustrom
- 23: Gaszuführungsdüse
- 24: Zuleitung
- 25: Spaltreaktor
- 26: Austrittsöffnung
- 27: Strömungsweg
- 28: Zuleitung
- 29: Kreis
- 30: stickstoffhaltige Spezies
- 31: Zerstäuberdüse
- 32: metallischer Behälter
- 33: zweite Zerstäuberdüse
- 34: Wasser
- 35: erste Stelle
- 36: zweite Stelle
- 37: Luft
- 38: Luft
- 39: teilweise vergaste, stickstoffhaltige Spezies
- 40: Pyrolysevorrichtung
- 41: erste Entnahmestelle
- 42: zweite Entnahmestelle
- 43: Einspeisungsstelle
- 44: Leitung
- 45: Anschluß
- 46: Anschluß
- 47: Stutzen
- 48: Behälterinnenwand
- 49: Behälterachse
- 50: Innenraum
- 51: Behälteraußenwand
- 52: Zwischenraum
- 53: Anschlußstutzen
- 54: Behältermantel
- 55: Öffnung
- 56: Öffnung
- 57: Einbau
- 58: Spalt
- 59: Teil
- 60: Raum
- 61: Anschlußstutzen
- 62: Auslaßstutzen
- 63: Behälterstirnseite
- 64: Mischkammer
- 65: Rohr
- 66: Platte
- 67: Windung
- 68: Auslaßöffnung
- 69: Auslaßöffnung
- 70: Auslaßöffnung
- 71: Auslaßöffnung
- 72: Leitung
- 73: Spaltreaktor
- 74: Wärmetauscher
- 75: Kühlmedium
- 76: Wasser
- 77: Stelle
- 78: Stelle
- 79: Leitblech
- 80: Auslaßöffnung

## Patentansprüche

1. Verfahren zur NOₓ-emissionsarmen Verbrennung eines Gasstroms, der als Brennstoff-N-haltige Gaskomponente mindestens HCN oder NH₃ oder ein Gemisch aus zwei oder mehr der Gaskomponenten NOₓ, HCN und NH₃ enthält, bei dem die Brennstoff-N-haltige Gaskomponente vor der Verbrennung wenigstens weitgehend in ein Spaltgas, enthaltend N₂, H₂ und gegebenenfalls CO, gespalten wird.

2. Verfahren nach Anspruch 1, **dadurch gekennzeichnet, daß** die Spaltung der Brennstoff-N-haltigen Gaskomponente katalytisch durch einen Metall oder Metalloxid enthaltenden Katalysator erfolgt.

3. Verfahren nach einem der Ansprüche 1 oder 2, **dadurch gekennzeichnet, daß** zur Spaltung ein Katalysator mit einem Gehalt an Nickeloxid und/oder Edelstahl eingesetzt wird.

4. Verfahren nach einem der Ansprüche 2 oder 3, **dadurch gekennzeichnet, daß** der Katalysator auf eine Temperatur von 200°C bis 1200°C, insbesondere auf eine Temperatur von 500°C bis 1000°C aufgeheizt wird.

5. Verfahren nach einem der Ansprüche 1 bis 4, **dadurch gekennzeichnet, daß** die Brennstoff-N-haltige Gaskomponente wenigstens anteilig aus dem pyrolytischen Abbau einer stickstoffhaltigen organischen Spezies stammt.

6. Verfahren zur Verbrennung einer stickstoffhaltigen, organischen Spezies, bei dem eine stickstoffhaltige organische Spezies thermisch in einer Pyrolysevorrichtung zu einem, eine Brennstoff-N-haltige Gaskomponente, insbesondere HCN oder NH₃, oder ein Gemisch aus zwei oder mehr der Gaskomponenten NOₓ, HCN und NH₃, enthaltenden Gasstrom pyrolysiert wird, die Brennstoff-N-haltige Gaskomponente anschließend wenigstens weitgehend in ein Spaltgas, enthaltend die Spaltprodukte N₂, H₂ und gegebenenfalls CO, oder ein Gemisch aus zwei oder mehr davon, gespalten und nachfolgend in einer Verbrennungsvorrichtung verbrannt wird.

7. Verfahren nach Anspruch 6, **dadurch gekennzeichnet, daß** die zur Pyrolyse der stickstoffhaltigen organischen Spezies erforderliche Energie wenigstens teilweise aus der Verbrennung des Spaltgases stammt.

8. Verbrennungsvorrichtung (1) zur NOₓ-emissionsarmen Verbrennung eines Gasstroms, der eine Brennstoff-N-haltige Gaskomponente, insbesondere HCN oder NH₃ oder ein Gemisch aus zwei oder mehr der Gaskomponenten NOₓ, HCN und NH₃ enthält, mindestens aufweisend
a) eine Brennkammer (5),
b) einen Brenner (2) und
c) einen Spaltreaktor (18) mit einer Zuführung (17) für den Gasstrom,
wobei die mit dem Gasstrom in Kontakt tretende Oberfläche des Spaltreaktors mindestens ein zur katalytischen Spaltung der Brennstoff-N-haltigen Gaskomponente in N₂, H₂ oder CO, oder ein Gemisch aus zwei oder mehr davon, geeignetes Material aufweist oder der Spaltreaktor (18) im Innenraum ein solches Material enthält und wobei die Katalytische Spaltung der Brennstoff-N-haltigen Gaskomponente vor der Verbrennung erfolgt.

9. Vorrichtung (1) nach Anspruch 8, **dadurch gekennzeichnet, daß** sie Mittel zur Beheizung des Spaltreaktors (18) und/oder der Verbrennungsluft aufweist.

10. Vorrichtung (1) nach einem der Ansprüche 8 oder 9, **dadurch gekennzeichnet, daß** der Brenner (2) ein Impulsbrenner ist.

11. Vorrichtung (1) nach einem der Ansprüche 8 bis 10, **dadurch gekennzeichnet, daß** der Spaltreaktor (18) durch die aus der Feuerungsleistung des Brenners entstehende Energie beheizbar ist, wobei vorzugsweise der Spaltreaktor (18) der Länge nach zumindest teilweise in das Innere der Brennkammer (5) hineinragt.

12. Vorrichtung (1) nach einem der Ansprüche 8 bis 11 **dadurch gekennzeichnet, daß** der Spaltreaktor (18) mindestens eine Austrittsöffnung (26) aufweist, die sich in der Brennkammer (5) in einem Rückstromgebiet von Verbrennungsabgas befindet.

13. Vorrichtung (1) nach einem der Ansprüche 8 bis 12, **dadurch gekennzeichnet, daß** sie mindestens eine Pyrolysevorrichtung (40) aufweist.

14. Vorrichtung (1) nach Anspruch 13, **dadurch gekennzeichnet, daß** die mindestens eine Pyrolysevorrichtung (40) innerhalb einer Brennkammer (5) angeordnet ist.

15. Vorrichtung nach einem der Ansprüche 8 bis 14, **dadurch gekennzeichnet, daß** sie eine Verdampfer-/Vergaservorrichtung (32) aufweist.

16. Vorrichtung nach Anspruch 15, **dadurch gekennzeichnet, daß** die Verdampfer-/Vergaservorrichtung (32) innerhalb einer Brennkammer (5) angeordnet ist.

## Claims

1. A process for the low-NOₓ-emission combustion of a gas stream comprising at least HCN or NH₃ or a mixture of two or more of the gas components NOₓ, HCN and NH₃ as fuel-N-containing gas component, in which the fuel-N-containing gas component is dissociated at least substantially into a dissociation gas comprising N₂, H₂ and possibly CO prior to combustion.

2. A process as claimed in claim 1, wherein the dissociation of the fuel-N-containing gas component is carried out catalytically by means of a catalyst comprising metal or metal oxide.

3. A process as claimed in claim 1 or 2, wherein a catalyst having a content of nickel oxide and/or stainless steel is used for the dissociation.

4. A process as claimed in claim 2 or 3, wherein the catalyst is heated to from 200°C to 1200°C, in particular from 500°C to 1000°C.

5. A process as claimed in any of claims 1 to 4, wherein the fuel-N-containing gas component originates at least partly from the pyrolytic degradation of a nitrogen-containing organic species.

6. A process for the combustion of a nitrogen-containing, organic species, in which a nitrogen-containing organic species is thermally pyrolized in a pyrolysis apparatus to give a gas stream comprising a fuel-N-containing gas component, in particular HCN or NH₃ or a mixture of two or more of the gas components NOₓ, HCN and NH₃, the fuel-N-containing gas component is subsequently at least substantially dissociated into a dissociation gas comprising the dissociation products N₂, H₂ and possibly CO or a mixture of two or more thereof and is subsequently burned in a combustion apparatus.

7. A process as claimed in claim 6, wherein the energy necessary for the pyrolysis of the nitrogen-containing organic species originates at least partly from the combustion of the dissociation gas.

8. A combustion apparatus (1) for the low-NOₓ-emission combustion of a gas stream comprising a fuel-N-containing gas component, in particular HCN or NH₃ or a mixture of two or more of the gas components NOₓ, HCN and NH₃, comprising at least
a) a combustion chamber (5)
b) a burner (2) and
c) a dissociation reactor (18) with a feed line (17) for the gas stream,
wherein the surface of the dissociation reactor which comes into contact with the gas stream comprises at least one material suitable for the catalytic dissociation of the fuel-N-containing gas component into N₂, H₂ or CO or a mixture of two or more thereof or the interior of the dissociation reactor (18) contains such a material and the catalytic dissociation of the fuel-N-containing gas component is carried out prior to combustion.

9. An apparatus (1) as claimed in claim 8 which has means of heating the dissociation reactor (18) and/or the combustion air.

10. An apparatus (1) as claimed in claim 8 or 9, wherein the burner (2) is an impulse burner.

11. An apparatus (1) as claimed in any of claims 8 to 10, wherein the dissociation reactor (18) can be heated by the energy arising from the firing power of the burner, with the dissociation reactor (18) preferably projecting longitudinally at least partly into the interior of the combustion chamber (5).

12. An apparatus (1) as claimed in any of claims 8 to 11, wherein the dissociation reactor (18) has at least one outlet opening (26) which is located in the combustion chamber (5) in a backflow region of combustion offgas.

13. An apparatus (1) as claimed in any of claims 8 to 12 comprising at least one pyrolysis apparatus (40).

14. An apparatus (1) as claimed in claim 13, wherein the pyrolysis apparatus or apparatuses (40) is/are located within a combustion chamber (5).

15. An apparatus as claimed in any of claims 8 to 14 comprising a vaporizer/gas fire apparatus (32).

16. An apparatus as claimed in claim 15, wherein the vaporizer/gas fire apparatus (32) is located within a combustion chamber (5).

## Revendications

1. Procédé pour la combustion à faible émission de NOₓ d'un courant de gaz qui contient, en tant que composant gazeux contenant des combustibles azotés, au moins HCN ou NH₃ ou un mélange d'au moins deux des composants gazeux choisis dans le groupe formé par NOₓ, HCN et NH₃, procédé lors duquel, avant de réaliser la combustion, on soumet, au moins pour l'essentiel, à un craquage, le composant gazeux contenant des combustibles azotés, obtenant un gaz de craquage contenant N₂, H₂ et éventuellement CO.

2. Procédé selon la revendication 1, **caractérisé en ce que** l'on procède au craquage du composant gazeux contenant les combustibles azotés, au moyen d'un catalyseur contenant un métal ou un oxyde de métal.

3. Procédé selon l'une quelconque des revendications 1 ou 2, **caractérisé en ce que** l'on met en oeuvre pour le craquage, un catalyseur contenant de l'oxyde de nickel et/ou de l'acier spécial.

4. Procédé selon l'une quelconque des revendications 2 ou 3, **caractérisé en ce que** l'on chauffe le catalyseur à une température comprise entre 200°C et 1 200°C, en particulier à une température comprise entre 500°C et 1 000°C.

5. Procédé selon l'une quelconque des revendications 1 à 4, **caractérisé en ce que** le composant gazeux contenant les combustibles azotés provient, au moins partiellement, de la décomposition pyrolytique d'une espèce organique contenant de l'azote.

6. Procédé pour la combustion d'une espèce organique contenant de l'azote, lors duquel on procède à une pyrolyse, par voie thermique, d'une espèce organique contenant de l'azote, dans un dispositif de pyrolyse, pour obtenir un composant gazeux contenant des combustibles azotés, en particulier un courant de gaz contenant HCN ou NH₃ ou un mélange d'au moins deux des composants gazeux choisis dans le groupe formé par NOₓ, HCN et NH₃, et lors duquel on soumet ensuite à un craquage le composant gazeux contenant les combustibles azotés, obtenant, au moins pour l'essentiel, un gaz de craquage contenant, en tant que produits de scission, N₂, H₂ et éventuellement CO ou un mélange d'au moins deux de ces composants, gaz de craquage que l'on soumet ensuite à une combustion dans un dispositif de combustion.

7. Procédé selon la revendication 6, **caractérisé en ce que** l'énergie nécessaire pour réaliser la pyrolyse de l'espèce organique contenant de l'azote, provient au moins partiellement de la combustion du gaz de craquage.

8. Dispositif de combustion (1) pour la combustion à faible émission de NOₓ d'un courant de gaz qui contient un composant gazeux contenant des combustibles azotés, en particulier HCN ou NH₃ ou un mélange d'au moins deux des composants gazeux choisis dans le groupe formé par NOₓ, HCN et NH₃, et présentant au moins
a) une chambre de combustion (5),
b) un brûleur (2) et
c) un réacteur de craquage (18) présentant une amenée (17) pour le courant gazeux,
dispositif dont la surface du réacteur de craquage en contact avec le courant de gaz, présente au moins une matière appropriée au craquage catalytique, du composant gazeux contenant les combustibles azotés, en N₂, en H₂ ou en CO, ou bien en un mélange contenant au moins deux de ces composés, ou bien dont le réacteur de craquage (18) contient, à l'intérieur, une matière d'un tel type, et où l'on procède, avant de réaliser la combustion, au craquage catalytique du composant gazeux contenant les combustibles azotés.

9. Dispositif (1) selon la revendication 8, **caractérisé en ce qu'**il présente des moyens de chauffage du réacteur de craquage (18) et/ou de l'air de combustion.

10. Dispositif (1) selon l'une quelconque des revendications 8 ou 9, **caractérisé en ce que** le brûleur (2) est un brûleur à impulsions.

11. Dispositif (1) selon l'une quelconque des revendications 8 à 10, **caractérisé en ce que** l'on peut chauffer le réacteur de craquage (18) au moyen de l'énergie engendrée par la capacité de chauffage du brûleur, de préférence le réacteur de craquage (18) étant situé, au moins partiellement dans le sens de la longueur, à l'intérieur de la chambre de combustion (5).

12. Dispositif (1) selon l'une quelconque des revendications 8 à 11, **caractérisé en ce que** le réacteur de craquage (18) présente au moins une ouverture de sortie (26) qui est située dans la chambre de combustion (5) dans une zone de reflux du gaz de combustion.

13. Dispositif (1) selon l'une quelconque des revendications 8 à 12, **caractérisé en ce qu'**il présente au moins un dispositif de pyrolyse (40).

14. Dispositif (1) selon la revendication 13, **caractérisé en ce que** l'on dispose au moins un dispositif de pyrolyse (40) à l'intérieur d'une chambre de combustion (5).

15. Dispositif (1) selon l'une quelconque des revendications 8 à 14, **caractérisé en ce qu'**il présente un dispositif d'évaporation/de gazéification (32).

16. Dispositif (1) selon la revendication 15, **caractérisé en ce que** l'on dispose le dispositif d'évaporation/de gazéification (32) à l'intérieur d'une chambre de combustion (5).
